(19) **Europäisches Patentamt European Patent Office Office européen des brevets**

(11) **EP 4 257 926 A1**

(12) **EUROPEAN PATENT APPLICATION**
published in accordance with Art. 153(4) EPC

(43) Date of publication:
**11.10.2023 Bulletin 2023/41**

(21) Application number: **21903219.0**

(22) Date of filing: **29.11.2021**

(51) International Patent Classification (IPC):
*G01C 21/30* (2006.01)

(52) Cooperative Patent Classification (CPC):
**G01C 21/30**

(86) International application number:
**PCT/JP2021/043663**

(87) International publication number:
**WO 2022/124115 (16.06.2022 Gazette 2022/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.12.2020 JP 2020202734**

(71) Applicants:
• **Pioneer Corporation
Tokyo 113-0021 (JP)**

• **Pioneer Smart Sensing Innovations Corporation
Tokyo 113-0021 (JP)**

(72) Inventors:
• **KATO, Masahiro
Kawagoe-shi, Saitama 350-8555 (JP)**
• **SUZUKI, Masami
Kawagoe-shi, Saitama 350-8555 (JP)**

(74) Representative: **Viering, Jentschura & Partner mbB
Patent- und Rechtsanwälte
Am Brauhaus 8
01099 Dresden (DE)**

(54) **INFORMATION PROCESSING DEVICE, CONTROL METHOD, PROGRAM, AND RECORDING MEDIUM**

(57)    A controller 13 of an in-vehicle device 1 is configured to acquire a DR position $X_{DR}$ that is a first candidate position of a vehicle. Further, the controllers 13 is configured to acquire an NDT position $X_{NDT}$ that is a second candidate position of the vehicle, the NDT position $X_{NDT}$ being determined based on NDT scan matching that is a matching between point cloud data and voxel data VD that is map data, the point cloud data being outputted by a lidar 2 that is the external sensor provided in the vehicle. Furthermore, the controllers 13 is configured to calculate a reliability value NRV representing the reliability of the NDT scan matching. The controllers 13 is configured to determine the estimated own vehicle position $X^$ based on the DR position $X_{DR}$, the NDT position $X_{NDT}$, and the reliability value NRV.

FIG. 11

START

S11 — CALCULATE PREDICTED OWN VEHICLE POSITION FROM GPS POSITIONING RESULT

S12 — POINT CLOUD DATA ACQUIRED ? — No / Yes

S13 — CALCULATE DR POSITION THAT IS PREDICTED OWN VEHICLE POSITION FROM VEHICLE VELOCITY SENSOR DATA, GYROSCOPE SENSOR DATA, & PRECEDING ESTIMATED OWN VEHICLE POSITION

S14 — APPLY DOWN-SAMPLING TO POINT CLOUD DATA

S15 — CALCULATE NDT POSITION THROUGH NDT MATCHING PROCESS USING DR POSITION AS INITIAL VALUE

S16 — CALCULATE ASSOCIATION RATIO DAR

S17 — CALCULATE SCORE VALUE OF NDT MATCHING

S18 — CALCULATE RELIABILITY VALUE NRV BASED ON DSS & DAR & E

S19 — GENERATE NDT RELIABILITY INDEX NRI FROM NRV

S20 — CALCULATE FINAL ESTIMATED OWN VEHICLE POSITION THROUGH WEIGHTED MEAN OF DR POSITION & NDT POSITION USING NRI

S21 — TERMINATED ? — No / Yes

END

EP 4 257 926 A1

**Description**

TECHNICAL FIELD

The present disclosure relates to position estimation.

BACKGROUND ART

Conventionally, there is known a technique for estimating a self position of a vehicle by matching shape data of a peripheral object measured by a measurement device such as a laser scanner with map information in which the shape of the peripheral object is stored in advance. For example, Patent Literature 1 discloses an autonomous moving system configured to determine whether a detected object is a stationary object or a moving object with respect to each voxel obtained by dividing the space, thereby to match the measurement data with map information with respect to voxels where the stationary object is present. Further, Patent Literature 2 discloses a scan matching method for performing own vehicle position estimation by matching voxel data per voxel including an average vector and a covariance matrix of a stationary object with point cloud data outputted by a lidar.

PRIOR ART DOCUMENTS

PATENT LITERATURE

    Patent Literature 1: WO2013/076829
    Patent Literature 2: WO2018/221453

SUMMARY

PROBLEM TO BE SOLVED BY THE INVENTION

When own vehicle position estimation is performed by matching voxel data with point cloud data outputted by the lidar as described in Patent Literature 2, The number of times of searching the solution becomes a finite number of times due to the limited processing time. However, in this case, the obtained solution becomes a local solution and it may not be an optimum solution. In particular, when the measurement is performed in such a space that occlusion occurs due to an obstacle such as another vehicle, or such a space that the periphery is sparse, or such a space that variation in features is poor, the possibility of being caught in a local solution will increase. Then, when the position based on the local solution is outputted as an estimation result, the position estimation accuracy will be reduced.
The present disclosure has been made in order to solve the above issues, and it is an object of the present invention to provide an information processing device capable of suitably preventing a decrease in the accuracy of the position estimation.

MEANS FOR SOLVING THE PROBLEM

One invention is an information processing device including:

    a first candidate position acquisition unit configured to acquire a first candidate position of a moving body;
    a second candidate position acquisition unit configured to acquire a second candidate position of the moving body, the second candidate position being determined based on matching between data based on an output from an external sensor provided in the moving body and map data;
    a reliability value calculation unit configured to calculate a reliability value representing a reliability of the matching;
    an estimated position determination unit configured to determine an estimated position of the moving body based on the first candidate position, the second candidate position, and the reliability value.

Another invention is a control method executed by a computer, the control method including:

    acquiring a first candidate position of a moving body;
    acquiring a second candidate position of the moving body, the second candidate position being determined based on matching between data based on an output from an external sensor provided in the moving body and map data;

calculating a reliability value representing a reliability of the matching;
determining an estimated position of the moving body based on the first candidate position, the second candidate position, and the reliability value.

Still another invention is a program causing a computer to:

acquire a first candidate position of a moving body;
acquire a second candidate position of the moving body, the second candidate position being determined based on matching between data based on an output from an external sensor provided in the moving body and map data;
calculate a reliability value representing a reliability of the matching;
determine an estimated position of the moving body based on the first candidate position, the second candidate position, and the reliability value.

BRIEF DESCRIPTION OF THE DRAWINGS

[FIG. 1] FIG. 1 is a schematic configuration diagram of a driving support system.
[FIG. 2] FIG. 2 is a block diagram showing a functional configuration of an in-vehicle device.
[FIG. 3] FIG. 3 illustrates an example of the functional block of the down-sampling processing unit.
[FIG. 4] FIG. 4 is a diagram showing the position of the vehicle to be estimated by the vehicle position estimation unit in two-dimensional Cartesian coordinates.
[FIG. 5] FIG. 5 illustrates an example of a schematic data structure of voxel data.
[FIG. 6] FIG. 6 illustrates an example of a functional block of the own vehicle position estimation unit.
[FIG. 7] FIG. 7 illustrates a positional relation between voxels having corresponding voxel data and measurement points each of which indicates a position around the voxels on a two-dimensional plane in the world coordinate system.
[FIG. 8] FIG. 8 illustrates graphs indicating the property of each calculation formula of the NDT reliability index.
[FIG. 9] FIG. 9 is a bird's-eye view of the area around the vehicle equipped with the in-vehicle device.
[FIGS. 10] FIGS. 10A and 10B illustrate graphs indicating the error distribution of the dead reckoning and the error distribution of the NDT scan matching.
[FIG. 11] FIG. 11 illustrates an example of a flowchart showing a procedure of the process related to the own vehicle position estimation.
[FIGS. 12] FIGS. 12A to 12C illustrate the self position estimation results according to the comparative example by a first lidar.
[FIGS. 13] FIGS. 13A to 13D illustrate the self position estimation results according to the comparative example by the first lidar.
[FIGS. 14] FIGS. 14A to 14F illustrate the self position estimation results according to the embodiment by the first lidar.
[FIGS. 15] FIGS. 15A to 15F illustrate the self position estimation results according to the embodiment by the first lidar.
[FIGS. 16] FIGS. 16A to 16F illustrate the self position estimation results according to the comparative example by a second lidar.
[FIGS. 17] FIGS. 17A to 17D illustrate the self position estimation results according to the comparative example by the second lidar.
[FIGS. 18] FIGS. 18A to 18F illustrate the self position estimation results according to the embodiment by the second lidar.
[FIGS. 19] FIGS. 19A to 19F illustrate the self position estimation results according to the embodiment by the second lidar.
[FIGS. 20] FIGS. 20A to 20D illustrate graphs showing the relation between the reliability value and NDT reliability index in the modification.

DETAILED DESCRIPTION OF PREFERRED EMBODIMENTS

According to a preferred embodiment of the present invention, the information processing device includes: a first candidate position acquisition unit configured to acquire a first candidate position of a moving body; a second candidate position acquisition unit configured to acquire a second candidate position of the moving body, the second candidate position being determined based on matching between data based on an output from an external sensor provided in the moving body and map data; a reliability value calculation unit configured to calculate a reliability value representing a reliability of the matching; an estimated position determination unit configured to determine an estimated position of the moving body based on the first candidate position, the second candidate position, and the reliability value.

According to this embodiment, the information processing device can suitably determine the estimated position in consideration of the first candidate position and the second candidate position in accordance with the reliability of the matching at the time of calculation of the second candidate position and suitably prevent a decrease in the position estimation accuracy.

In one mode of the information processing device, the reliability value calculation unit is configured to determine the reliability value based on at least a score value indicating a fitting degree of the matching. According to this mode, the information processing device can accurately determine the reliability of the matching for determining the second candidate position.

In another mode of the information processing device, the data is second point cloud data that is point cloud data obtained by applying down-sampling to first point cloud data that is point cloud data outputted from the external sensor, and the reliability value calculation unit is configured to determine the reliability value based on at least one of a size of the down-sampling or the number of measurement points of the first point cloud data. According to this mode, the information processing device can accurately determine the reliability of the matching for determining the second candidate position.

In still another mode of the information processing device, the data is point cloud data, and the map data is voxel data representing positions of an object with respect to each voxel that is a unit area, and the second candidate position acquisition unit is configured to associate measurement points of the point cloud data with the each voxel and determine the second candidate position based on the matching between voxel data of voxels subjected to the association and the measurement points associated with the voxels subjected to the association. According to this mode, the information processing device can suitably determine the second candidate position based on the matching between the point cloud data and the voxel data.

In still another mode of the information processing device, the reliability value calculation unit is configured to calculate the reliability value based on at least an association ratio that is a ratio of the number of the measurement points associated with the voxels. According to this mode, the information processing device can accurately determine the reliability of the matching for determining the second candidate position.

In still another mode of the information processing device, the reliability value calculation unit is configured to calculate the reliability value that has a proportional relation with or a positive correlation with: the association ratio; a size of down-sampling to be applied to first point cloud data that is point cloud data outputted by the external senser or the number of measurement points of the first point cloud data; and a score value indicating a fitting degree of the matching. According to this aspect, the information processing device can accurately determine the reliability of the matching for determining the second candidate position.

In still another mode of the information processing device, the estimated position determination unit is configured to determine the estimated position by a weighted mean of the first candidate position and the second candidate position, which are weighted based on the reliability value. According to this mode, the information processing device can calculate the estimated position in which the first candidate position and the second candidate position are suitably fused.

In still another mode of the information processing device, the estimated position determination unit is configured to calculate a reliability index that is the reliability value normalized to range from 0 to 1 as a weight for the second candidate position. According to this mode, the information processing device can accurately set the weight to be used for calculating the weighted mean.

In still another mode of the first candidate position acquisition unit is configured to acquire the position of the moving object determined by dead reckoning as the first candidate position. According to this mode, the information processing device can suitably acquire the first candidate position independent of the output from the external sensor.

According to another preferred embodiment of the present invention, there is provided a control method executed by a computer, the control method including: acquiring a first candidate position of a moving body; acquiring a second candidate position of the moving body, the second candidate position being determined based on matching between data based on an output from an external sensor provided in the moving body and map data; calculating a reliability value representing a reliability of the matching; determining an estimated position of the moving body based on the first candidate position, the second candidate position, and the reliability value. By executing this control method, the computer can suitably prevent a decrease in position estimation accuracy.

According to still another preferred embodiment of the present invention, there is provided a program causing a computer to: acquire a first candidate position of a moving body; acquire a second candidate position of the moving body, the second candidate position being determined based on matching between data based on an output from an external sensor provided in the moving body and map data; calculate a reliability value representing a reliability of the matching; determine an estimated position of the moving body based on the first candidate position, the second candidate position, and the reliability value. By executing a program, it is possible to suitably prevent a decrease in position estimation accuracy. In some embodiments, the program is stored in a storage medium.

EMBODIMENTS

Hereinafter, preferred embodiments of the present invention are described below with reference to drawings. Hereinafter, preferred embodiments of the present invention are described below with reference to drawings. It is noted that a character with "^" or "-" on its top is expressed in this specification as "A^" or "A-" (where "A" is a character) for convenience.

(1) Overview of Driving Support System

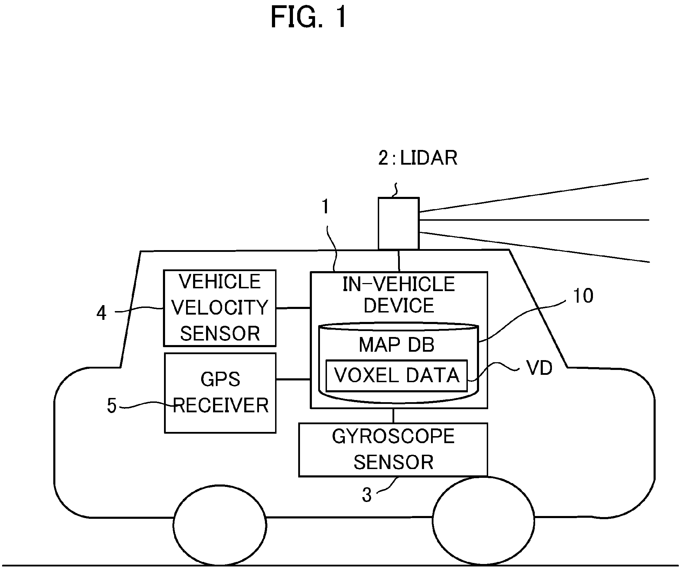

FIG. 1 is a schematic configuration of a driving support system according to the present embodiment. The driving support system includes an in-vehicle device 1 that moves together with a vehicle that is a moving body, a lidar (Lidar: Light Detection and Ranging, or Laser Illuminated Detection And Ranging) 2, a gyroscope sensor 3, a vehicle velocity sensor 4, and a GPS receiver 5.

The in-vehicle device 1 is electrically connected to the lidar 2, the gyroscope sensor 3, the vehicle velocity sensor 4, and the GPS receiver 5, and estimates the position (also referred to as "own vehicle position") of the vehicle in which the in-vehicle device 1 is provided on the basis of the output signals thereof. Then, the in-vehicle device 1 performs autonomous driving control of the vehicle or the like so as to travel along the route to the set destination based on the estimation result of the own vehicle position. The in-vehicle device 1 stores a map database (DB: DataBase) 10 including voxel data "VD". The voxel data VD is data per voxel which includes position data of stationary structures, wherein a voxel is a cube (regular grid) which becomes the minimum unit in the three-dimensional space. The voxel data VD contains the data representing the measured point cloud data of stationary structures in the voxel of interest by normal distribution. As will be described later, the voxel data VD is used for scan matching based on NDT (Normal Distributions Transform). The in-vehicle device 1 estimates at least the yaw angle and the position of the vehicle on the plane by NDT scanning matching. The in-vehicle device 1 may further perform the estimation of the height position, the pitch angle and the roll angle of the vehicle. Unless otherwise noted, the term "own vehicle position" shall also include angle(s) of the posture such as the yaw angle of the vehicle to be estimated.

The lidar 2 emits pulse lasers with respect to a predetermined angular range in the horizontal and vertical directions to thereby discretely measure the distance to object(s) existing in the outside and generate three dimensional point cloud data indicating the position of the objects. In this case, the lidar 2 includes a radiation unit configured to radiate a laser beam while changing the irradiation direction, a light receiving unit configured to receive the reflected light (scattered light) of the irradiated laser beam, and an output unit configured to output scan data (which is data of a point constituting the point cloud data and which is hereinafter referred to as "measurement point") generated based on the light signal received by the light receiving unit. The measurement point is generated based on the irradiation direction corresponding to the laser beam received by the light receiving unit and the response delay time of the laser beam to be identified based on the received light signal described above. In general, the closer the distance to the object is, the higher the accuracy of the distance measurement value outputted by the lidar becomes whereas the farther the distance is, the lower the accuracy becomes. The lidar 2, the gyroscope sensor 3, the vehicle velocity sensor 4, and the GPS receiver 5 respectively provide the output data to the in-vehicle device 1.

The in-vehicle device 1 is an example of the "information processing device" in the present invention, and the lidar 2 is an example of the "external sensor" or the "measurement device" in the present invention. It is noted that the driving support system may include an inertial measurement device (IMU) for measuring the acceleration and angular velocities of the vehicle in three axial directions in place of or in addition to the gyroscope sensor 3.

(2) Configuration of In-vehicle Device

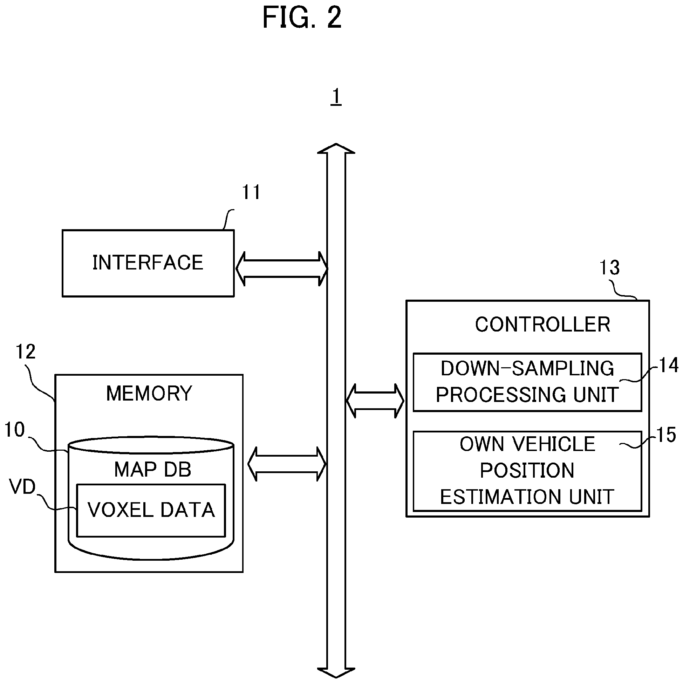

FIG. 2 is a block diagram showing an example of a hardware configuration of the in-vehicle device 1. The in-vehicle device 1 mainly includes an interface 11, a memory 12, and a controller 13. Each of these elements is connected to one another through a bus line.

The interface 11 performs an interface operation related to data exchange between the in-vehicle device 1 and an external device. In the present exemplary embodiment, the interface 11 acquires output data from sensors such as the lidar 2, the gyroscope sensor 3, the vehicle velocity sensor 4, and the GPS receiver 5 and supplies the output data to the controller 13. The interface 11 also provides signals relating to the travelling control of the vehicle generated by the controller 13 to an electronic control unit (ECU: Electronic Control Unit) of the vehicle. The interface 11 may be a wireless interface, such as a network adapter, for performing wireless communication, or a hardware interface, such as a cable, for connecting to an external device. The interface 11 may perform interface operation with various peripheral devices such as an input device, a display device, a sound output device, and the like.

The memory 12 is configured by various volatile and non-volatile memories such as a RAM (Random Access Memory), a ROM (Read Only Memory), a hard disk drive, a flash memory, and the like. The memory 12 stores a program for the controller 13 to perform a predetermined process. The program to be executed by the controller 13 may be stored in a storage medium other than the memory 12.

The memory 12 also stores the map DB 10 including voxel data VD.

The map DB 10 may be stored in a storage device external to the in-vehicle device 1 such as a hard disk connected to the in-vehicle device 1 via the interface 11. The above-described storage device may be a server device that communicates with the in-vehicle device 1. Further, the storage device may be configured by a plurality of devices. The map DB 10 may also be updated periodically. In this case, for example, the controller 13 receives partial map information about the area to which the vehicle position belongs from the server device that manages the map information via the interface 11, and reflects it in the map DB 10.

The memory 12 further stores, in addition to the map DB 10, information to be required for the process to be executed by the in-vehicle device 1 in the present embodiment. For example, the memory 12 stores information to be used for setting the size of the down-sampling to be applied to the point cloud data for one cycle period of scanning by the lidar 2. Further, the memory 12 stores the information regarding the calculation formula to be used for normalization relating to the calculation of the reliability of the NDT scan matching.

The controller 13 includes one or more processors, such as a CPU (Central Processing Unit), GPU (Graphics Processing Unit), and TPU (Tensor Processing Unit), and controls the entire in-vehicle device 1. In this case, the controller 13 performs processing related to the own vehicle position estimation by executing a program stored in the memory 12 or the like.

The controller 13 functionally includes a down-sampling processing unit 14 and an own vehicle position estimation unit 15. Then, the controller 13 functions as the "first candidate position acquisition means", the "second candidate position acquisition means", the "reliability value calculation means", the "estimated position determination means", and a computer which executes a program.

The down sampling processing unit 14 performs down-sampling of the point cloud data outputted from the lidar 2 to thereby generate point cloud data (also referred to as "processed point cloud data") adjusted to reduce the number of measurement points. In this down-sampling, the down-sampling processing unit 14 averages the point cloud data per unit space that has a predetermined size and thereby generates the processed point cloud data corresponding to the reduced number of measurement points. Hereafter, the size of the down-sampling (corresponding to the above-described predetermined size) is also referred to as "down-sampling size DSS". In the NDT matching at each clock time, the down-sampling processing unit 14 adaptively sets the down-sampling size DSS such that the number (also referred to as "associated measurement points number Nc") of measurement points, among the processed point cloud data after the down-sampling, associated with the voxel data VD is set within a predetermined target range. Hereafter, the target range of the associated measurement points number Nc is also referred to as "target range $R_{Nc}$".

The own vehicle position estimation unit 15 estimates the own vehicle position by performing scan matching (NDT scan matching) based on NDT on the basis of the processed point cloud data generated by the down-sampling process unit 14 and the voxel data VD corresponding to the voxels to which the point cloud data belongs.

(3) Down-sampling Size Setting

Next, details of the process to be executed by the down-sampling processing unit 14 will be described. Schematically, at each clock time, the down-sampling processing unit 14 compares the associated measurement points number Nc with the target range $R_{Nc}$ indicated by target range information after performing the down-sampling, and sets the size of the down-sampling at the subsequent clock time according to the comparison result. Thereby, the down-sampling processing unit 14 adaptively determines the size of the down-sampling so that the associated measurement points number Nc is maintained within the target range $R_{Nc}$.

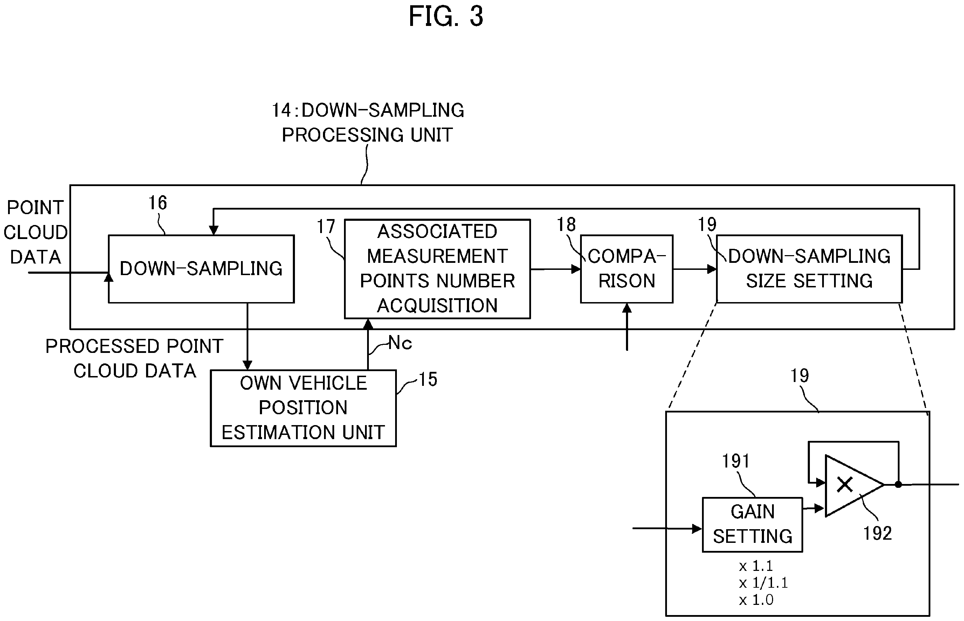

FIG. 3 shows an example of the functional blocks of the down-sampling processing unit 14. The down-sampling processing unit 14 functionally includes a down-sampling block 16, an associated measurement points number acquisition block 17, a comparison block 18, and a down-sampling size setting block 19. In FIG. 3, blocks to exchange data with each other are connected by solid line, but the combination of the blocks to exchange data with each other is not limited to the combination shown in FIG. 3. It is true for the drawings of other functional blocks described below.

The down-sampling block 16 performs down-sampling of the point cloud data for one cycle period of scanning generated at each clock time by the lidar to thereby generate processed point cloud data at each clock time. In this case, the down-sampling block 16 divides the space into grids based on the set size of the down-sampling and calculates the representative point of the measurement points of the point cloud data included in each of the grids. In this case, for example, the space to be divided is a space in the three-dimensional coordinate system whose axes are along the traveling direction, the height direction, and the lateral direction (i.e., the direction perpendicular to the traveling direction and the height direction) of the in-vehicle device 1, respectively. The grids are formed by dividing the space along each of these directions. The size of the down-sampling is a default size stored in the memory 12 or a size set immediately before by the down-sampling size setting block 19. The down-sampling block 16 supplies the generated processed point cloud data to the own vehicle position estimation unit 15.

It is noted that the size of the down-sampling may vary among the traveling direction, the height direction, and the lateral direction of the in-vehicle device 1. Any voxel grid filter method may also be used for the down-sampling block 16.

The associated measurement points number acquisition block 17 acquires the associated measurement points number Nc from the own vehicle position estimation unit 15. In this instance, for each clock time, the own vehicle position estimation unit 15 performs NDT matching of the processed point cloud data supplied from the down-sampling block 16 and outputs the associated measurement points number Nc for each clock time to the associated measurement points number acquisition block 17. The associated measurement points acquisition block 17 supplies the associated measurement points number Nc to the comparison block 18.

The comparison block 18 compares the magnitude between the target range $R_{Nc}$ indicated by the target range information and the associated measurement points number Nc at each clock time, and supplies the comparison result to the down-sampling size setting block 19. In this case, for example, the comparison block 18 determines the comparison result which falls under one of the following cases:

The associated measurement points number Nc is larger than the upper limit of the target range $R_{Nc}$;
The associated measurement points number Nc is within the target range $R_{Nc}$; or
The associated measurement points number Nc is smaller than the lower limit of the target range $R_{Nc}$.

Then, the comparison block 18 supplies the determination result to the down-sampling size setting block 19. For example, when the target range $R_{Nc}$ indicates the range from 600 to 800, the comparison block 18 makes the above-described determination by using the upper limit of the target range $R_{Nc}$ set to 800 and the lower limit of the target range $R_{Nc}$ set to 600. The target range $R_{Nc}$ is not limited to the range from 600 to 800, but is determined according to the hardware to be used, the performance of the processor, and the time required to be completed (i.e., the time interval between the successive clock times).

The down-sampling size setting block 19 sets the size of the down-sampling to be applied at the subsequent clock time based on the comparison result of the comparison block 18. In this case, the down sampling size setting block 19 increases the size of the down sampling when the associated measurement points number Nc is greater than the upper limit of the target range $R_{Nc}$, and decreases the size of the down sampling when the associated measurement points number Nc is less than the lower limit of the target range $R_{Nc}$. On the other hand, the down sampling size setting block 19 maintains (i.e., does not change) the size of the down sampling when the associated measurement points number Nc is within the target range $R_{Nc}$.

FIG. 3 also illustrates a specific embodiment of a down-sampling size setting block 19 having a gain setting sub-block 191 and a multiplication sub-block 192.

Based on the comparison result in the comparison block 18, the gain setting sub-block 191 sets the gain by which the multiplication sub-block 192 multiplies the size of the current size of the down-sampling. In this case, the gain setting sub-block 191 sets the gain to be greater than 1 when the associated measurement points number Nc is greater than the upper limit of the target range $R_{Nc}$, and sets the gain to be less than 1 when the associated measurement points number Nc is less than the lower limit of the target range $R_{Nc}$, and sets the gain to 1 when the associated measurement points number Nc is within the target range $R_{Nc}$. In FIG. 3, the gain is set as follows as an example.

The associated measurement points number Nc is larger than the upper limit of the target area $R_{Nc}$

$\Rightarrow$ Gain "1.1",

The associated measurement points number Nc is smaller than the lower limit of the target area $R_{Nc}$

$\Rightarrow$ Gain "1 / 1.1 ",

The associated measurement points number Nc is within the target range $R_{Nc}$

$\Rightarrow$ Gain "1.0"

The multiplication sub-block 192 outputs, as the size of the down-sampling to be used for the subsequent clock time, the value obtained by multiplying the current size of the down-sampling by the gain set by the gain setting sub-block 191.

According to such a configuration, when the associated measurement points number Nc is larger than the upper limit of the target area $R_{Nc}$, the down-sampling size setting block 19 can increase the size of the down-sampling to change the size of the down-sampling such that the number of measurement points of the processed point cloud data is easily reduced. Similarly, when the associated measurement points number Nc is less than the lower limit of the target range $R_{Nc}$, the down-sampling size setting block 19 can decrease the size of the down-sampling to change the size of the down sampling such that the number of measurement points of the processed point cloud data is easily increased.

It is noted that the respective values of the gain to be set in the gain setting sub-block 191 are examples, and are set to appropriate numerical values based on the experimental result or the like. Further, the down-sampling size setting block 19 may perform addition or subtraction of a predetermined value instead of multiplying by the gain. In this case, when the associated measurement points number Nc is greater than the upper limit of the target range $R_{Nc}$, the down-sampling size setting block 19 raises the size of the down-sampling by a predetermined value that is a positive number. In contrast, when the associated measurement points number Nc is less than the lower limit of the target range $R_{Nc}$, the down-sampling size setting block 19 lowers the size of the down-sampling by a predetermined value that is a positive number. The above gain and the predetermined value may be set to vary depending on the direction (the traveling direction, the lateral direction, the height direction).

(4) Position Estimation Based on NDT Scan Matching

Next, the position estimation based on NDT scan matching executed by the own vehicle position estimation unit 15 will be described.

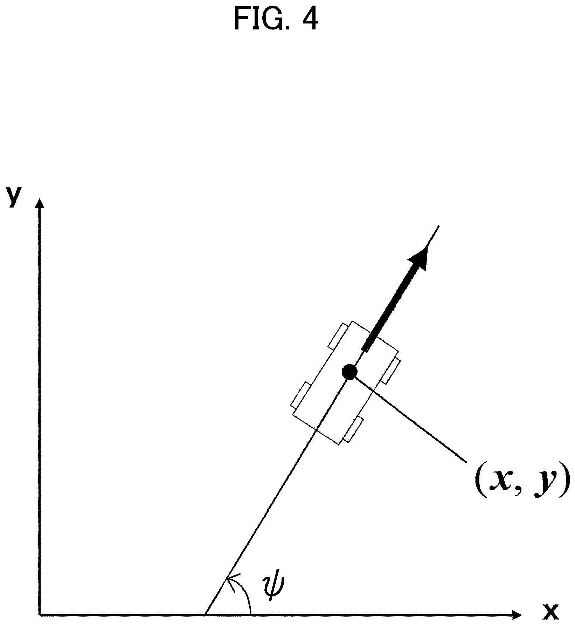

FIG. 4 is a diagram illustrating a position of a vehicle to be estimated by the vehicle position estimation unit 15 in the two-dimensional Cartesian coordinates. As shown in FIG. 4, the own vehicle position in the plane defined on the two-dimensional x-y Cartesian coordinates is expressed by the coordinates "(x, y)" and the azimuth (yaw angle) "$\psi$" of the own vehicle. Here, the yaw angle $\psi$ is defined as the angle formed between the traveling direction of the vehicle and the x-axis. The coordinates (x, y) indicate, for example, an absolute position corresponding to a combination of latitude and longitude, or world coordinates indicating a position with a predetermined point as the origin. Then, the own vehicle position estimation unit 15 performs the own vehicle position estimation in which these x, y, and $\psi$ are set as the estimation parameters. In addition to x, y, and $\psi$, the own vehicle position estimation unit 15 may further perform the own vehicle position estimation in which at least one of the height position, the pitch angle, and the roll angle of the vehicle in the three-dimensional Cartesian coordinate system is estimated as an estimation parameter.

Next, voxel data VD to be used for NDT scan matching will be described. The voxel data VD contains data which represents by normal distribution the measured point cloud data of stationary structure(s) with respect to each voxel.

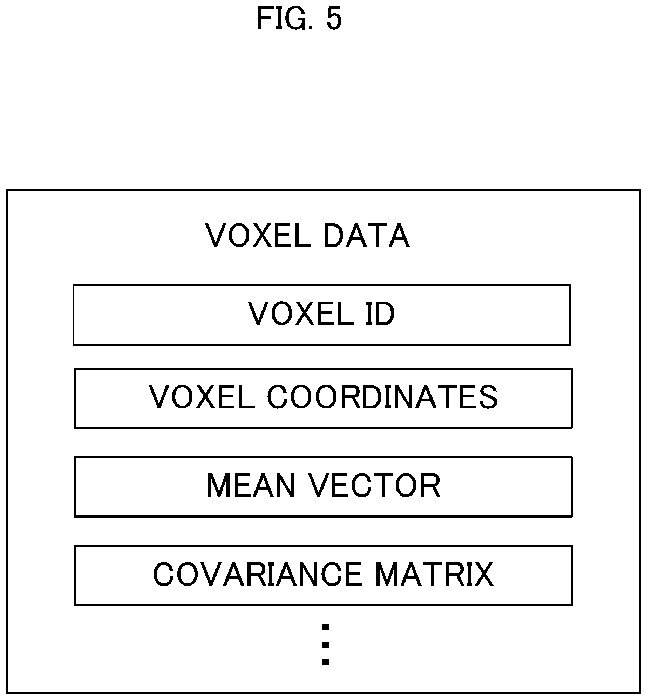

FIG. 5 shows an example of the schematic data structure of the voxel data VD. The voxel data VD contains the parameter information for expressing point cloud data in a voxel by normal distribution. In this example, the voxel data includes a voxel ID, voxel coordinates, a mean vector, and a covariance matrix, as shown in FIG. 5.

The "voxel coordinates" indicates the absolute three-dimensional coordinates of the reference position of each voxel such as the center position of each voxel. Each voxel is a cube obtained by dividing the space into lattice-shaped spaces, and since the shape and size of each voxel are determined in advance, it is possible to identify the space of each voxel by the voxel coordinates. The voxel coordinates may be used as the voxel ID.

The "mean vector" and the "covariance matrix" show the mean vector and the covariance matrix corresponding to the parameters when the point cloud within the voxel of interest is expressed by normal distribution. It is herein assumed that the coordinates of a point "i" in a voxel "n" are expressed as the following equation and the number of point cloud in the voxel n is denoted by "$N_n$".

$$X_n(i) = [x_n(i), y_n(i), z_n(i)]^T$$

The mean vector "$\mu_n$" and the covariance matrix "$V_n$" in the voxel n are expressed by the following equations (1) and (2), respectively.

[Formula 1]

$$\mu_n = \begin{bmatrix} \overline{x}_n \\ \overline{y}_n \\ \overline{z}_n \end{bmatrix} = \frac{1}{N_n} \sum_{i=1}^{N_n} X_n(i) \quad (1)$$

[Formula 2]

$$V_n = \frac{1}{N_n - 1} \sum_{i=1}^{N_n} \left\{ X_n(i) - \mu_n \right\} \left\{ X_n(i) - \mu_n \right\}^T \quad (2)$$

Next, the outline of NDT scan matching using the voxel data VD will be described.

In the NDT scan matching, the following estimation parameters including the displacement on the road plane (it is herein assumed as x-y coordinate system) and the direction of the vehicle as elements are to be estimated.

$$P = [t_x, t_y, t_\psi]^T$$

Here, "$t_x$" indicates the displacement in the x direction, "$t_y$" indicates the displacement in the y direction, "$t_\psi$" indicates the yaw angle.

Further, the coordinates of the point cloud data outputted by the lidar 2 are expressed by the following equation.

$$X_L(j) = [x(j), y(j), z(j)]^T$$

Then, the mean value "$L'_n$" of $X_L(j)$ is expressed by the following equation (3).
[Formula 3]

$$L'_n = \begin{bmatrix} L'_x \\ L'_y \\ L'_z \end{bmatrix} = \frac{1}{N} \sum_{j=1}^{N} X_L(j) \quad (3)$$

Then, using the estimation parameters P described above, when coordinate transformation is applied to the mean value L', the coordinates "$L_n$" after the coordinate transformation is represented by the following equation (4).
[Formula 4]

$$L_n = \begin{bmatrix} L_x \\ L_y \\ L_z \end{bmatrix} = \begin{bmatrix} \cos t_\psi & -\sin t_\psi & 0 \\ \sin t_\psi & \cos t_\psi & 0 \\ 0 & 0 & 1 \end{bmatrix} \begin{bmatrix} L'_x \\ L'_y \\ L'_z \end{bmatrix} + \begin{bmatrix} t_x \\ t_y \\ 0 \end{bmatrix} \quad (4)$$

The vehicle position estimation unit 15 searches for the voxel data VD to be associated with the processed point cloud data converted into the absolute coordinate system (also referred to as "world coordinate system") that is the same coordinate system as in the map DB 10, and calculates the evaluation function value (also referred to as "individual evaluation function value") "$E_n$" of the voxel n based on the mean vector $\mu_n$ and the covariance matrix $V_n$ included in the voxel data VD. In this instance, the own vehicle position estimation unit 15 calculates the individual evaluation function value $E_n$ of the voxel n based on the following equation (5).
[Formula 5]

$$E_n = \exp \left\{ -\frac{1}{2} (L_n - \mu_n)^T V_n^{-1} (L_n - \mu_n) \right\} \quad (5)$$

The own vehicle position estimation unit 15 calculates a total evaluation function value (also referred to as "score value") "E (k)" considering all voxels to be matched, which is expressed by the following equation (6). The score value E (k) is served as the fit index of the matching.
[Formula 6]

$$E(k) = \sum_{n=1}^{M} E_n = E_1 + E_2 + \cdots + E_M \quad (6)$$

Thereafter, the own vehicle position estimation unit 15 calculates the estimation parameters P which maximize the score value E (k) by using an arbitrary root finding algorithm such as the Newton method. Then, the own vehicle position estimation unit 15 calculates the own vehicle position (also referred to as "NDT position") "$X_{NDT}$ (k)" based on NDT scan matching by applying the estimated parameters P to the position (also referred to as "DR position") "$X_{DR}$(k)" calculated by dead reckoning at the time k. Here, the DR position $X_{DR}$ (k) corresponds to the temporary vehicle position prior to calculating the estimated vehicle position X^(k), and is also referred to as the predicted vehicle position "X" (k)". In this instance, the NDT position $X_{NDT}$ (k) is expressed by the following equation (7).
[Formula 7]

$$\mathbf{X}_{NDT}\left(k\right) = \overline{\mathbf{X}}\left(k\right) + \mathbf{P} \qquad （7）$$

Thereafter, the own vehicle position estimation unit 15 calculates the final own vehicle position (also referred to as "estimated own vehicle position") "X^ (k)" at the present clock time k by fusing the DR position $X_{DR}$ (k) and the NDT position $X_{NDT}$ (k).

(5) Calculation of Estimated Own Vehicle Position

Next, a method of calculating the estimated own vehicle position X^ (k) will be described. Schematically, the own vehicle position estimation unit 15 calculates the reliability value of the NDT scan matching at each clock time, and calculates the estimated own vehicle position X^ at the target clock time from the DR position $X_{DR}$ and the NDT position $X_{NDT}$ at the target clock time by weighting based on the reliability value. Hereafter, the reliability value of the NDT scan matching is also referred to as "reliability value NRV (NDT Reliability Value)".

The DR position $X_{DR}$ is an example of the "first candidate position" in the present invention, and the NDT position $X_{NDT}$ is an example of the "second candidate position" in the present invention. Further, the estimated own vehicle position X^ is an example of the "estimated position" in the present invention.

(5-1) Block Configuration

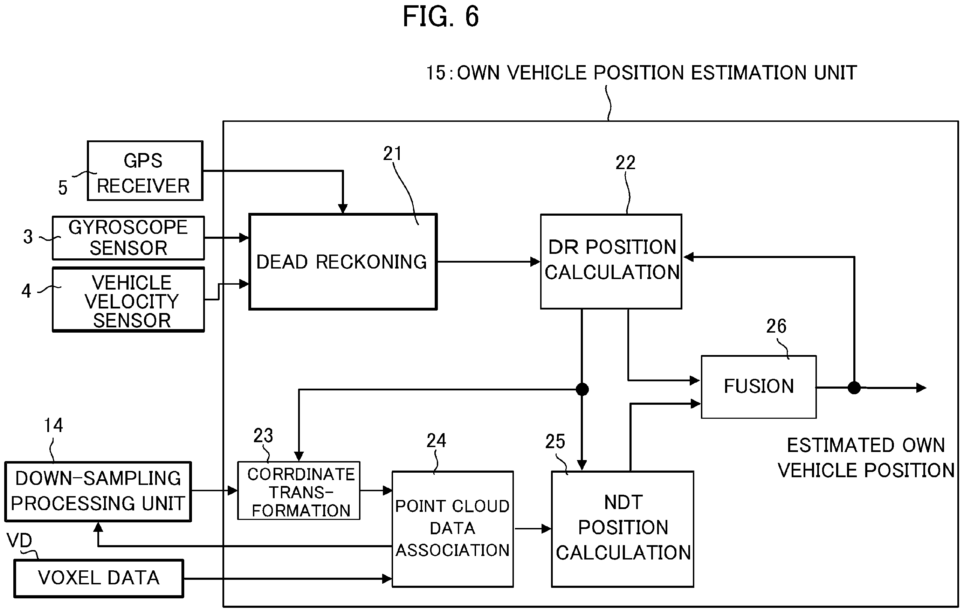

FIG. 6 is an example of functional blocks of the own vehicle position estimation unit 15. As shown in FIG. 6, the own vehicle position estimation unit 15 includes a dead reckoning block 21, a DR position calculation block 22, a coordinate transformation block 23, a point cloud data association block 24, an NDT position calculation block 25, and a fusion block 26.

The dead reckoning block 21 uses the movement velocity and the angular velocity of the vehicle based on the output from the gyroscope sensor 3, the vehicle velocity sensor 4, and GPS receiver 5 and the like thereby to determine the movement distance and the azimuth change from the previous clock time. The DR position calculation block 22 calculates the DR position $X_{DR}$ (k) at the time k obtained by adding the movement distance and the azimuth change to the estimated own vehicle position X^ (k-1) at the time k-1 which is the previous clock time. This DR position $X_{DR}$ (k) is the own vehicle position calculated at the time k based on dead reconning, and corresponds to the predicted own vehicle position X⁻ (k).

The coordinate transformation block 23 transforms the processed point cloud data after down-sampling outputted from the down-sampling process unit 14 into data in the world coordinate system that is the same coordinate system as the map DB 10. In this case, for example, based on the predicted own vehicle position outputted by the DR position calculation block 22 at the time k, the coordinate transformation block 23 performs coordinate transformation of the processed point cloud data at the time k. Instead of applying the above-described coordinate transformation to the processed point cloud data after down-sampling, the above-described coordinate transformation may be applied to the point cloud data before down-sampling. In this case, the down-sampling processing unit 14 generates the processed point cloud data in the world coordinate system obtained by down-sampling the point cloud data in the world coordinate system after the coordinate transformation. It is noted that the process of transforming the point cloud data in the lidar coordinate system with respect to the lidar installed in the vehicle to the vehicle coordinate system, and the process of transforming the vehicle coordinate system to the world coordinate system are disclosed in the International Publication WO2019/188745 and the like, for example.

The point cloud data association block 24 matches the processed point cloud data in the world coordinate system outputted by the coordinate transformation block 23 to the voxel data VD represented by the same world coordinate system to thereby associate the processed point cloud data with the voxels. The NDT position calculation block 25 calculates the individual evaluation function value based on the equation (5) for each voxel that is associated with the processed point cloud data, and calculates the estimation parameters P which maximize the score value E (k) based on the equation (6). Then, based on the equation (7), the NDT position calculation block 25 calculates the NDT position $X_{NDT}$ (k) by applying the estimation parameters P determined at the time k to the DR position $X_{DR}$ (k) outputted by the DR position calculation block 22. This NDT position $X_{NDT}$ (k) is the own vehicle position at the time k determined based on the NDT scan matching.

The fusion block 26 calculates the estimated own vehicle position X^ at the time k by fusing (integrating) the DR position $X_{DR}$ (k) at the time k and the NDT position $X_{NDT}$ (k) at the time k. In this instance, the fusion block 26 calculates the reliability value NRV of the NDT scan matching at the time k and sets, based on the reliability value NRV, the weights for the DR position $X_{DR}$ (k) and the NDT position $X_{NDT}$ (k), thereby calculating the estimated own vehicle position X^. Details of the processing of the fusion block 26 will be described later.

Here, a specific procedure of associating the measurement points with the voxel data VD will be supplemented with a simple example.

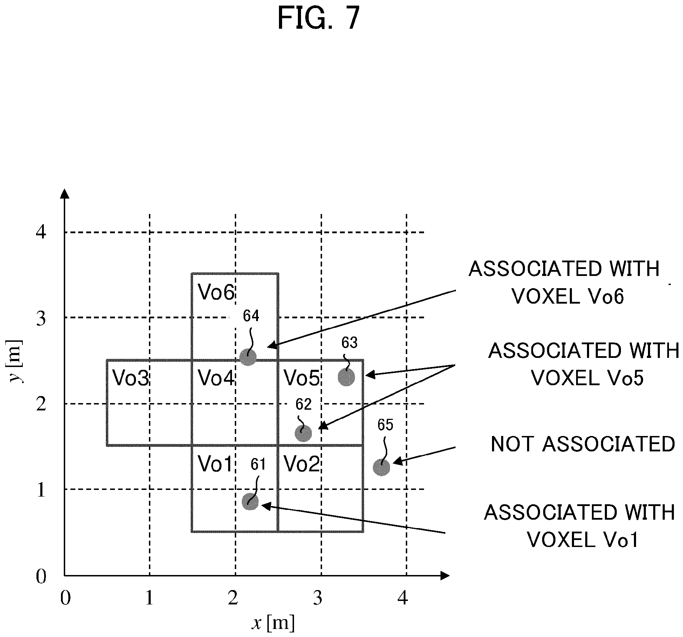

FIG. 7 shows the positional relation between the voxels "Vo1" to "Vo6", which have corresponding voxel data VD, on the x-y two-dimensional plane in the world coordinate system and the measurement points 61 to 65 indicating the positions at or near these voxels. Here, for convenience of explanation, it is assumed that the z-coordinate, in the world coordinate system, of the center positions of the voxels Vo1 to Vo6 is equal to the z-coordinate, in the world coordinate system, of the measurement points 61 to 65.

First, the coordinate transformation block 23 converts the point cloud data including the measurement points 61 to 65 to data in the world coordinate system. Thereafter, the point cloud data association block 24 rounds off the fractions of the measurement points 61 to 65 in the world coordinate system. In the example shown in FIG. 7, since the size of each voxel that is a cube is 1 meter, the point cloud data association block 24 rounds off the decimal fractions of the x, y, and z coordinates of the measurement points 61 to 65, respectively.

Next, the point cloud data association block 24 determines the voxels corresponding to the respective measurement points 61 to 65 by matching the voxel data VD corresponding to the voxels Vo1 to Vo6 to the coordinates of the measurement points 61 to 65. In the example shown in FIG. 7, since the coordinates (x, y) of the measurement point 61 after the above-described rounding are (2, 1), the point cloud data association block 24 associates the measurement point 61 with the voxel Vo1. Similarly, since the coordinates (x, y) of the measurement point 62 and the measurement point 63 after the rounding described above are (3, 2), the point cloud data association block 24 associates the measurement point 62 and the measurement point 63 with the voxel Vo5. Further, since the coordinates (x, y) of the measurement point 64 after the above-described rounding is (2, 3), the point cloud data association block 24 associates the measurement point 64 with the voxel Vo6. On the other hand, since the coordinates (x, y) of the measurement point 65 after the above-described rounding is (4, 1), the point cloud data association block 24 determines that there is no voxel data VD to be associated with the measurement point 65. Thereafter, the position correction block 25 performs estimation of the estimation parameters P using the measurement points and the voxel data VD which are associated by the point cloud data association block 24. In this case, the number of measurement points after down-sampling is five, but the associated measurement points number Nc is four. The associated measurement points number Nc is reduced in the case of a sparse space with fewer structures around the roadway, and also in the case of a phenomenon (called occlusion) in which the light beam from the lidar is blocked by the presence of other vehicle(s) in the vicinity of the own vehicle.

(5-2) Details of Fusion Block Processing

First, a description will be given of the method of calculating the NRV representing the reliability of the NDT scan matching.

The fusion block 26 calculates the reliability value NRV based on the down-sampling size DSS, the score value E, and the proportion of the number of measurement points (i.e., the associated measurement points number Nc) associated with the voxel data VD in the processed point cloud data after down-sampling. Hereafter, the proportion of the associated measurement points number Nc described above is also referred to as "association ratio DAR (Data Association Ratio)". The association ratio DAR = (the associated measurement points number Nc / the points number of the processed point cloud data after down-sampling).

Specifically, the fusion block 26 calculates the reliability value NRV at each clock time as the product of the down-sampling size DSS, the score value E, and the association ratio DAR at each time as shown in the following equation (8).

$$NRV = DSS \times E \times DAR \qquad (8)$$

Empirically, the reliability value approximately ranges from 0 to 15 since the down-sampling size DSS ranges from 0.1 to 5.0, the association ratio DAR ranges from 0 to 1.0, and the score value E ranges from 0 to 3.0, respectively.

Here, the validity of the calculation of the reliability NRV based on the equation (8) will be described. The performance of the NDT scan matching has the following three features (the first feature to the third feature), and the equation (8) is provided based on these three features.

Generally, when the points number of the point cloud data detected by the lidar 2 is large, it is possible to calculate the NDT scan matching on the basis of high-density data in a wide range, which results in high reliability of the NDT scan matching. Therefore, in such a case that the control to adaptively adjust the associated measurement points number Nc by changing the down-sampling size DSS is adopted, the down-sampling size DSS increases with increase in the points number of the point cloud data. Therefore, as the first feature, the larger the down-sampling size DSS is, the higher the reliability of the NDT scan matching becomes.

In addition, it is presumed that the larger the association ratio DAR is, the less occlusion of constructions constituting the voxel data VD by obstacles such as other vehicles in the vicinity tends to occur and the smaller the amount of change from the generation time of the voxel data VD becomes. Therefore, as the second feature, the larger the association ratio DAR is, the higher the reliability of the NDT scan matching becomes.

Furthermore, the larger the score value E is, the more likely it is that the calculated estimated parameters P are the optimal solution. Therefore, as the third feature, the larger the score E is, the higher the reliability of the NDT scan matching becomes.

Taking the above into consideration, the fusion block 26 calculates the reliability value NRV by utilizing the down-sampling size DSS, the association ratio DAR, and the score value E at every clock time in the NDT scan matching process. Further, in the equation (8), since the reliability value NRV is determined as the product of them, the reliability value NRV also approaches 0 when any of the down-sampling size DSS, the association ratio DAR, and the score value E approaches 0.

Next, the weighting based on the reliability NRV will be described. Assuming that the weight for the outcome of the NDT scan matching process is "w" ($0 \leqq w \leqq 1$), the fusion block 26 calculates the weighted mean of the DR position $X_{DR}$ and the NDT position $X_{NDT}$ on the basis of the following equation (9), and calculates the estimated own vehicle position $X^{\wedge}$.

[Formula 8]

$$\hat{X} = w \cdot X_{NDT} + (1 - w) \cdot X_{DR} = w \begin{bmatrix} x_{NDT} \\ y_{NDT} \\ z_{NDT} \\ \psi_{NDT} \end{bmatrix} + (1 - w) \begin{bmatrix} x_{DR} \\ y_{DR} \\ z_{DR} \\ \psi_{DR} \end{bmatrix} \quad (9)$$

Here, a description will be given of the setting of the weight w. Since the reliability of the NDT scan matching decreases with decreasing reliability value NRV, the fusion block 26 decreases the weight w with decreasing reliability value NRV. On the other hand, since the reliability of the NDT scan matching increases with increasing reliability value NRV, the fusion block 26 increases the weight w with increasing reliability value NRV.

In the present embodiment, the fusion block 26 calculates an index (also referred to as "NDT reliability index NRI (NDT Reliability Index)") in which the reliability value NRV is normalized to have a value range from 0 to 1, and the calculated NDT reliability index NRI is used as the weight w. Namely, the fusion block 26 calculates the estimated own vehicle position $X^{\wedge}$ through weighted averaging calculations of the NDT position index NRI and the DR position $X_{DR}$ by using the NDT reliability index NRI on the basis of the following equation (10).

[Formula 9]

$$\hat{X} = NRI \cdot X_{NDT} + (1 - NRI) \cdot X_{DR} = NRI \begin{bmatrix} x_{NDT} \\ y_{NDT} \\ z_{NDT} \\ \psi_{NDT} \end{bmatrix} + (1 - NRI) \begin{bmatrix} x_{DR} \\ y_{DR} \\ z_{DR} \\ \psi_{DR} \end{bmatrix} \quad (10)$$

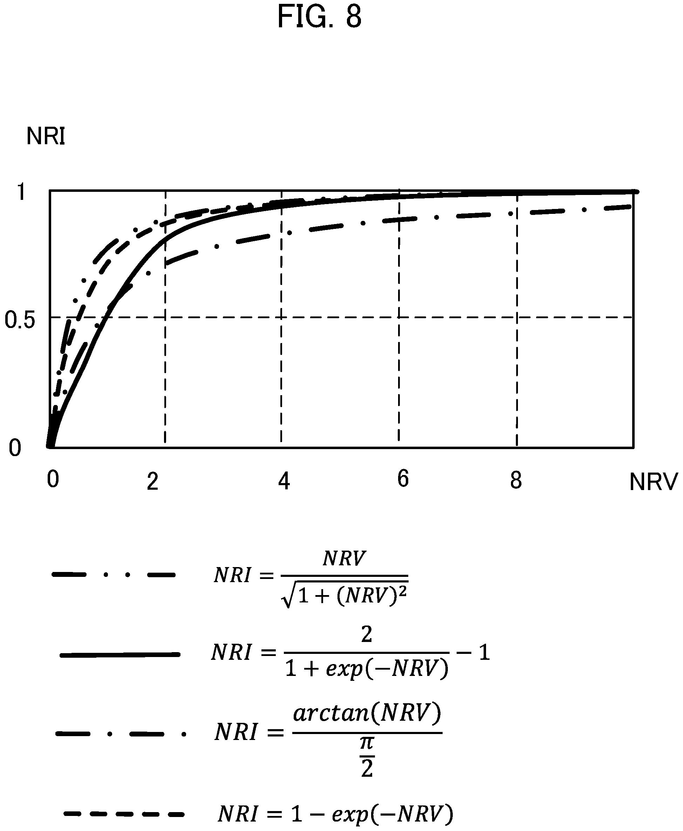

Next, a description will be given of the calculation method of the NDT reliability index NRI. FIG. 8 illustrates graphs indicative of the properties of the four formulas to calculate the NDT reliability index NRI, respectively. Here, the relation between the reliability NRV and NDT reliability index NRI for each of the following equations (11) to (14) is shown.

[Formula 10]

$$NRI = \frac{NRV}{\sqrt{1 + (NRV)^2}} \qquad (11)$$

$$NRI = \frac{2}{1 + exp(-NRV)} - 1 \qquad (12)$$

$$NRI = \frac{arctan(NRV)}{\frac{\pi}{2}} \qquad (13)$$

$$NRI = 1 - exp(-NRV) \qquad (14)$$

Here, with increase in the accuracy and stability of the NDT scan matching, the down-sampling size DSS, the association ratio NDR, and the score value E increase and therefore, as all of these values increase, the NDT reliability index NRI approaches 1. On the other hand, if even one of the down-sampling size DSS and the association ratio NDR and the score values E become a small value, the NDT reliability index NRI approaches 0 regardless of the other values.

Next, a supplementary description will be given of the equations (11) to (14). As shown in FIG. 8, the equation (11) indicates the NDT reliability index NRI rises rapidly with respect to the reliability value NRV, and the equation (12) indicates the NDT reliability index NRI rises in the early stage, and the equation (13) indicates the NDT reliability index NRI changes slowly with respect to the reliability value NRV overall. In addition, the equation (14) shows the property that the rise is slightly slower than the equation (11), but NDT reliability index NRI approaches 1 at the earliest. Thus, it can be said that there is a difference in the sensibility of the NDT reliability index NRI with respect to the reliability NRV in the respective equations. The equation to be used for calculating the NDT reliability index NRI from the reliability NRV is selected from the equation (11) to (14) in advance according to the reliability of dead reckoning. As the reliability of the dead reckoning, for example, the sensitivity unevenness of the gyroscope sensor 3 and the performance value indicated by the catalog description of each sensor used in the dead reckoning may be considered.

(5-3) Technical Effect

Next, the technical effect of calculating the estimated own vehicle position $X^{\wedge}$ through the weighted mean calculation of the DR position $X_{DR}$ and the NDT position $X_{NDT}$ based on the reliability NRV will be supplemented.

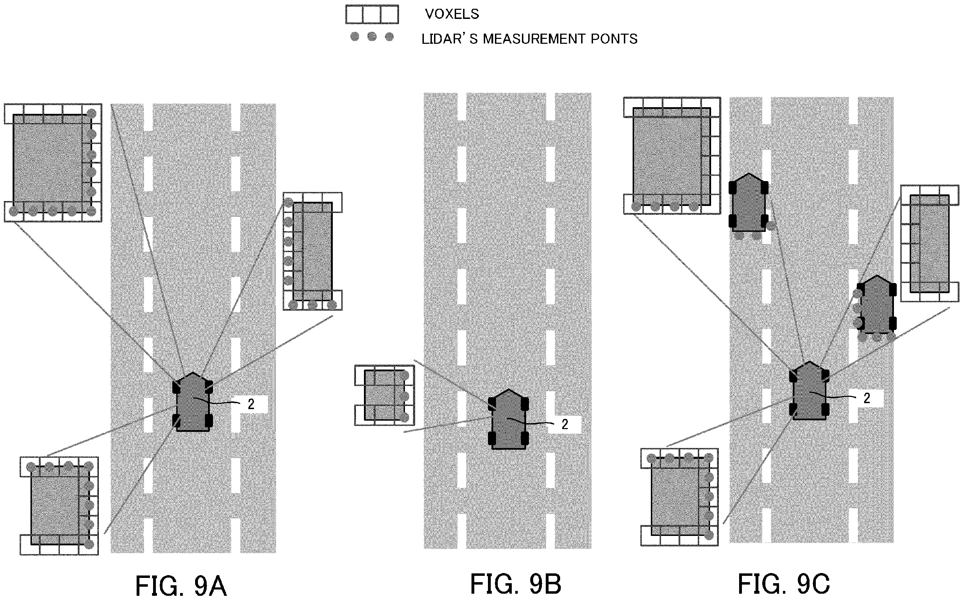

The accuracy of the NDT scan matching could decrease when there are few surrounding structures or when occlusion occurs. This will be described with reference to FIGS. 9A to 9C.

FIG. 9A to FIG. 9C show a bird's-eye view of the area around the vehicle equipped with the in-vehicle device 1 when the down-sampling size is set to be equal to the voxel size. In FIGS. 9A to 9C, the voxels having the corresponding voxel data VD are indicated by rectangular frames, and the positions of the measurement points obtained for one cycle period of scanning by the lidar 2 are indicated by dots. Here, FIG. 9A shows an example when there are many structures around the lidar 2, FIG. 9B shows an example when there are few structures around the lidar 2, and FIG. 9C shows an example when occlusion occurs. In addition, there is corresponding voxel data VD in the voxels corresponding to the surface position of the structure.

As shown in FIGS. 9A to 9C, the number of measurement points of the point cloud data acquired by the lidar 2 depends on not only the measurement distance and the viewing angle of the lidar 2 but also the environment around the own vehicle. For example, when the periphery is dense space (see FIG. 9A), the number of measurement points of the point cloud data is large. In contrast, when the periphery is sparse space (see FIG. 9B), the number of measurement points of the point cloud data is small. In addition, when occlusion by other vehicles or the like occurs (see FIG. 9C), the associated measurement points number Nc available for NDT scan matching is reduced. Then, in the example shown in FIG. 9A, the optimal solution is likely to be obtained by NDT scan matching since the associated measurement points number Nc available for NDT scan matching is enough, but in the examples shown in FIG. 9B and FIG. 9C, there is a possibility that a local solution is obtained in NDT scan matching because the associated measurement points number Nc is small.

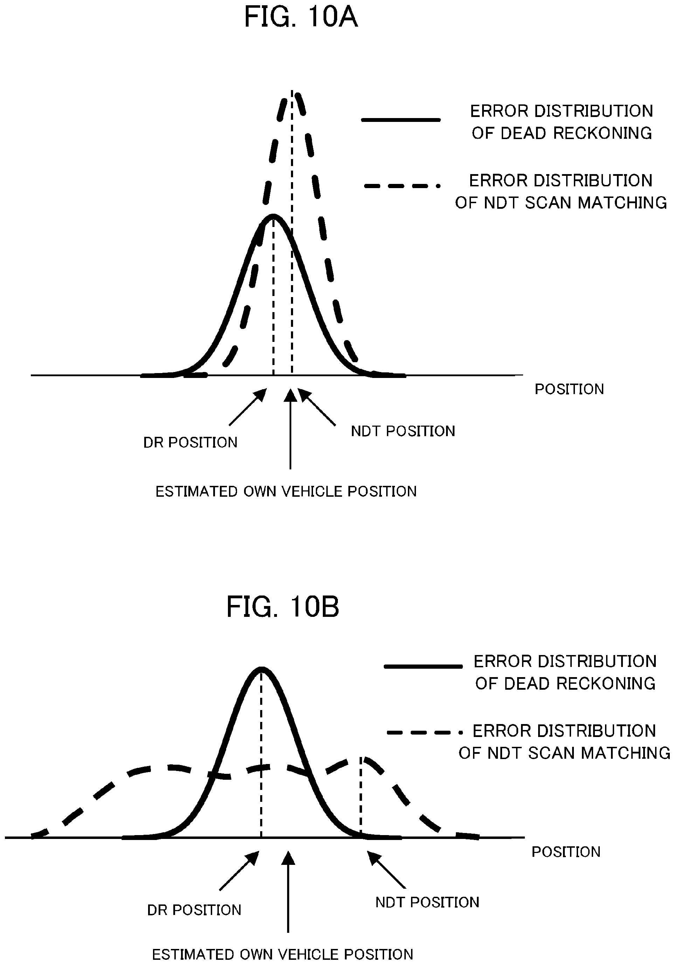

Next, a description will be given of the accuracy comparison between NDT scan matching and dead reckoning with reference to FIG. 10A and FIG. 10B.

FIGS. 10A and 10B illustrates graphs showing the error distribution of dead reckoning and the error distribution of NDT scan matching, respectively. Specifically, FIG. 10A shows the error distribution of the dead reckoning and the error distribution of NDT scan matching when the number of point clouds of the point cloud data outputted by the lidar 2 is relatively rich and the occlusion is relatively small, respectively. Further, FIG. 10B shows the error distribution of dead reckoning and the error distribution of NDT scan matching in a case that the number of point cloud data outputted by the lidar 2 is too small or that occlusion is relatively large, respectively. Further, in FIG. 10A and FIG. 10B, for the sake of simplicity, the error distribution for one element constituting the estimated position (including the posture) is shown, and the DR position $X_{DR}$, the NDT position $X_{NDT}$ and the estimated own vehicle position $X^\wedge$ are indicated by arrows, respectively.

When the number of point clouds of point cloud data outputted by lidar 2 is abundant and there is little occlusion, the error distribution of NDT scan matching shows a normal distribution-like property because NDT scan matching is stably calculated. Generally speaking, since the measurement accuracy of the lidar 2 is high, in this case, the error distribution of NDT scan matching has a narrow-tail-and-steep characteristic in comparison with the error distribution of dead reckoning, as shown in FIG. 10A. Therefore, the result of calculating the position of the vehicle by NDT scan matching is a sufficiently reliable result. Therefore, since the reliability value NRV is large and NDT reliability index NRI is a value close to 1, the estimated own vehicle position $X^\wedge$ by the weighted mean in equation (10) is close to $X_{NDT}$.

On the other hand, when the number of point cloud data outputted by the lidar 2 is small or occlusion occurs, the calculation result of NDT scan matching will include errors. If the error is large, as shown in FIG. 10B, it may be a characteristic that has plural gentle peaks. In the calculation of NDT scan matching, the evaluation function (score E) is searched for the maximum. Therefore, the highest peak is calculated as a result. In FIG. 10B, since the peak at the right end of the distribution is the highest, the peak is calculated as the NDT position $X_{NDT}$. In such a case, the NDT position $X_{NDT}$ is not very reliable.

In view of the above, the fusion block 26 according to the present embodiment calculates the estimated own vehicle position $X^\wedge$ by calculating the weighted mean of the DR position $X_{DR}$ and the NDT position $X_{NDT}$ on the basis of the reliability value NRV. Thus, when the reliability of NDT scan matching is high and the NDT reliability index NRI is close to 1, the outcome close to the NDT position $X_{NDT}$ is calculated as the final estimated own vehicle position $X^\wedge$ (fusion position) as shown in FIG. 10A. On the other hand, when the reliability of NDT scan matching is low and the NDT reliability index NRI is close to 0, as shown in FIG. 10B, the outcome approaches the DR position $X_{DR}$ while getting away from the NDT position $X_{NDT}$. Accordingly, even when the reliability of NDT scan matching is low, it is possible to prevent the accuracy deterioration of the final estimated own vehicle position.

(6) Processing Flow

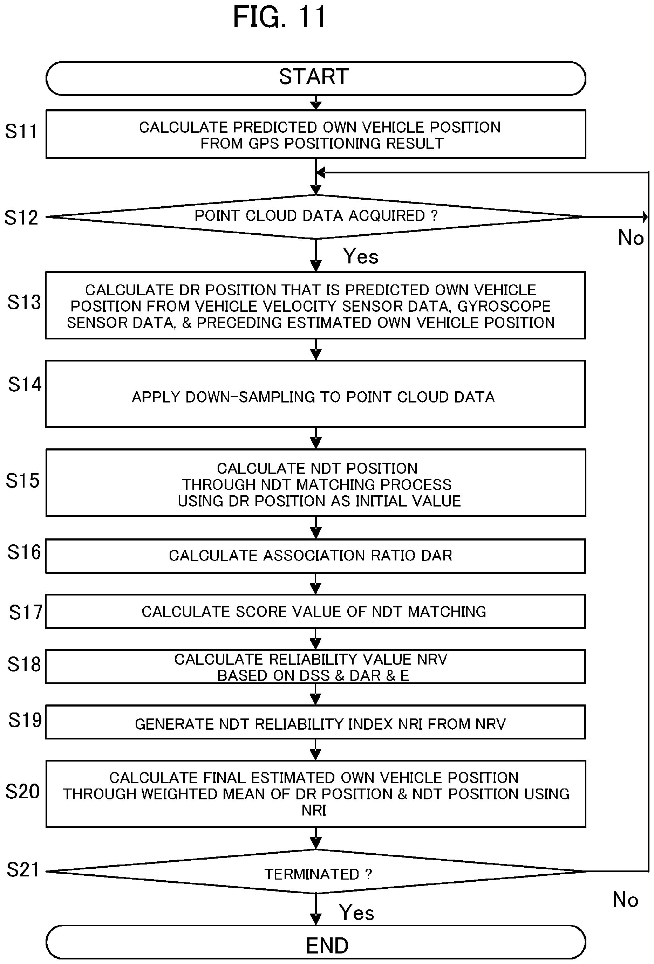

FIG. 11 is an example of a flowchart illustrating a procedure of the process related to the own vehicle position estimation executed by the controller 13 of the in-vehicle device 1. The controller 13 starts the processing of the flowchart shown in FIG. 11 when it is necessary to perform own vehicle position estimation, such as when the power is turned on.

First, the controllers 13 determine the predicted own vehicle position based on the positioning result from the GPS receiver 5 (step S11). Then, the controller 13 determines whether or not it has acquired the point cloud data from the lidar 2 (step S12). Then, if the controller 13 has not acquired the point cloud data from the lidar 2 (step S12; No), it continues to make the determination at step S12. During the period in which the point cloud data cannot be acquired, the controllers 13 determines the own vehicle position on the basis of the positioning result from the GPS receiver 5. The controllers 13 may determine the own vehicle position based on not only the positioning result from the GPS receiver 5 but also the output from any sensors other than the point cloud data.

When the controller 13 has acquired the point cloud data from the lidar 2 (step S12; Yes), the controller 13 executes dead reckoning from the preceding estimated own vehicle position, the moving velocity and the angular velocity of the vehicle detected on the basis of the gyroscope sensor 3, the vehicle velocity sensor 4, and the like, and calculates the DR position $X_{DR}$ as the predicted own vehicle position (step S13). Then, the controller 13 applies down-sampling using the present setting of the down-sampling size DSS to the point cloud data for one cycle period of scanning by the lidar 2 at the current clock time (step S14).

Next, the controller 13 calculates the NDT position $X_{NDT}$ by executing NDT matching process using the DR position $X_{DR}$ as the initial value (step S15). In this instance, the controller 13 performs a process of converting the processed point cloud data into data in the world coordinate system and associating the processed point cloud data converted into the world coordinate system with the voxels having the corresponding voxel data VD.

Next, the controllers 13 calculates the association ratio DAR based on the association between the processed point cloud data and the voxel data VD in the NDT matching process (step S16). Further, the controller 13 determines the down-sampling size DSS to be used at the subsequent down-sampling by comparing the associated measurement points number Nc with the target range $R_{Nc}$. Furthermore, the controller 13 acquires the score value E for the estimated parameters P obtained by the NDT matching process (step S17).

Then, the controllers 13 calculates the reliability value NRV on the basis of the down-sampling size DSS, the association ratio DAR, and the score value E (step S18). Then, the controller 13 generates the NDT reliability index NRI from the reliability value NRV (step S19).

Then, the controllers 13 calculates the estimated own vehicle position X^ by the weighted mean calculation of the DR position $X_{DR}$ and the NDT position $X_{NDT}$ using the NDT reliability index NRI (step S20). Then, the controllers 13 determine whether or not to terminate the own vehicle position estimation process (step S21). Then, when it is determined that the own vehicle position estimation process should be terminated (step S21; Yes), the controller 13 ends the process of the flowchart. On the other hand, when continuing the own vehicle position estimation process (step S21; No), the controller 13 gets back to the process at step S12 and performs estimation of the own vehicle position at the following clock time.

(7) Consideration Based on Experimental Results

Next, consider the experimental results for the above-described examples.

The applicant carried out the own vehicle position estimation by matching the point cloud data of the lidar obtained during the travel to the voxel data (ND maps) prepared beforehand for the travelling route, in such a way that the applicant drove a vehicle equipped with medium-range lidars including two lidars in front and two lidars in rear each of which has 60-degree horizontal viewing angle and an operating frequency 12Hz (cycle 83.3ms). In order to evaluate the accuracy, the RTK-GPS position data is used as the correct position data.

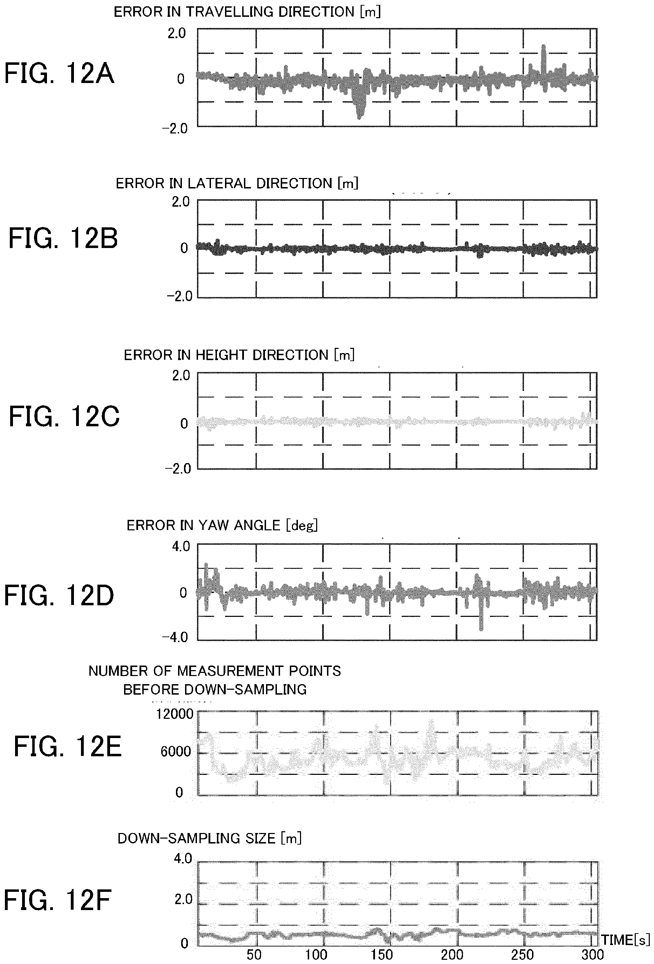

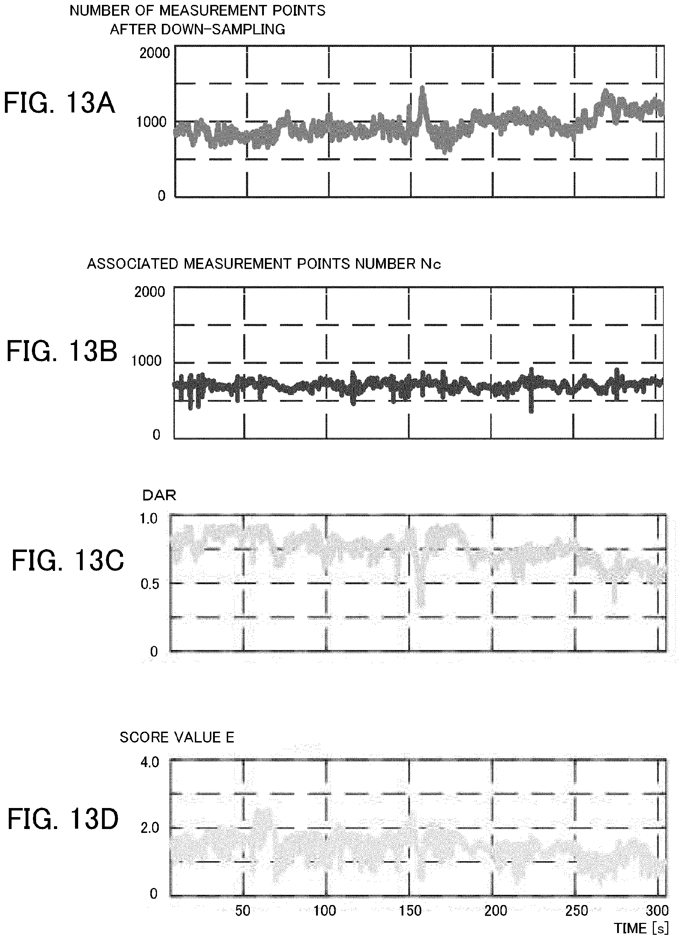

FIGS. 12A to 12F and 13A to 13D show the vehicle position estimation results according to a comparative example in which the NDT position $X_{NDT}$ is determined as the estimated vehicle position X^. Here, with respect to the positioning results of RTK-GPS, FIG. 12A indicates the error in the traveling direction, FIG. 12B indicates the error in the lateral direction, FIG. 12C indicates the error in the height direction, FIG. 12D indicates the error in the yaw angle, FIG. 12E indicates the number of measurement points of the point cloud data before down-sampling, FIG. 12F indicates the size of down-sampling, respectively. Further, FIG. 13A indicates the number of measurement points of the processed point cloud data after down-sampling, FIG. 13B indicates the associated measurement points number Nc, FIG. 13C indicates the association ratio DAR, FIG. 13D indicates the score value E (k), respectively. The value of RMSE (Root Mean Squared Error) in the traveling direction was 0.235m, the value of RMSE in the lateral direction was 0.044m, the value of RMSE in the height direction was 0.039m, and the value of RMSE in the azimuth (yaw angle) was 0.232 degrees.

As shown in FIG. 12A, when the time is around 130s, the error in the moving direction is large and the line is thick in general, so it is inferred that NDT matching has not been performed stably in the period concerned. Further, since the number of measurement points prior to down-sampling shown in FIG. 12E is not so many, the down-sampling size DSS shown in FIG. 12F is relatively small and 1m or less. The association ratio DAR shown in FIG. 13C is also lower, the score E shown in FIG. 13D is also slightly smaller. In other words, it is inferred that, in the calculation of NDT scan matching in the comparative example, the reliability is not very high because the down-sampling size DSS, the association ratio DAR, and the score E are both relatively small. Therefore, many errors are included in the NDT matching result. It is presumed that the error in the traveling direction shown in FIG. 12A increases because of the error.

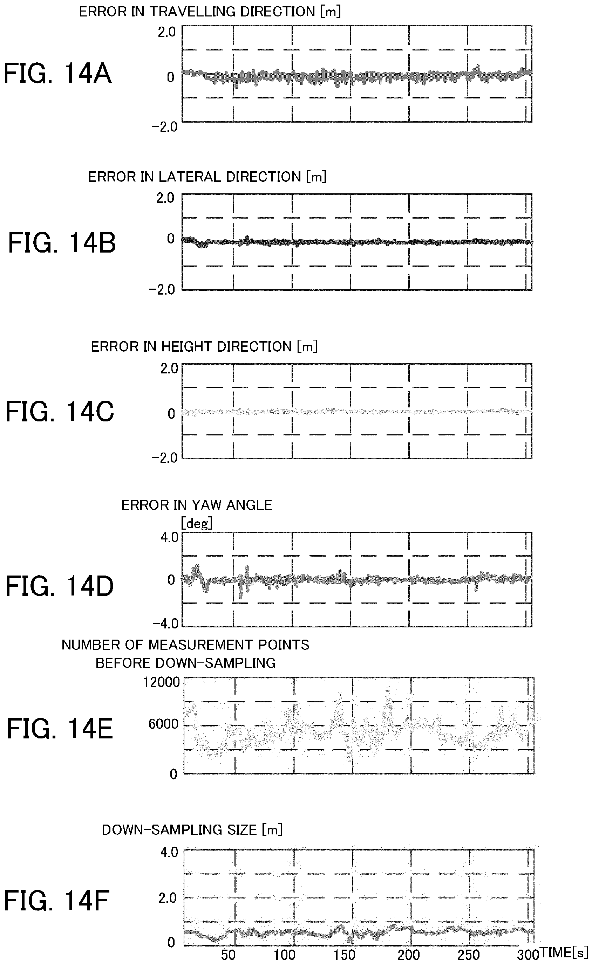

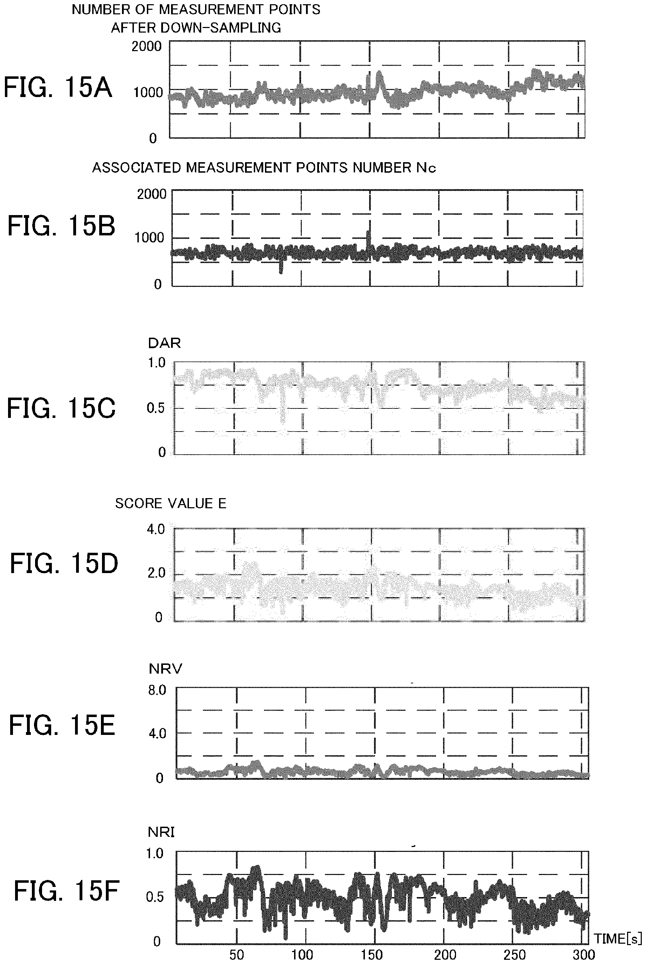

FIGS. 14A to 14F and FIG. 15A to 15F show the results of the vehicle position estimation according to the embodiment in which the estimated own vehicle position X^ is determined by fusion of the NDT position $X_{NDT}$ and the DR position $X_{DR}$. Here, with respect to the positioning result of RTK-GPS, FIG. 14A indicates the error in the traveling direction, FIG. 14B indicates the error in the lateral direction, FIG. 14C indicates the error in the height direction, FIG. 14D indicates the error in the yaw angle, FIG. 14E indicates the number of measurement points of the point cloud data before down-sampling, FIG. 14F indicates the size of down-sampling, respectively. Further, FIG. 15A indicates the number of measurement points of the processed point cloud data after down-sampling, FIG. 15B indicates the associated measurement points number Nc, FIG. 15C indicates the association ratio DAR, FIG. 15D indicates the score value E (k), FIG. 15E indicates the reliability value NRV, FIG. 15F indicates the NDT reliability index NRI, respectively. The value of RMSE in the traveling direction is 0.150m, the value of RMSE in the lateral direction is 0.034m, the value of RMSE in the height direction is 0.022m, and the value of RMSE in the azimuth (yaw angle) is 0.171 degrees, which are better values than the values in the comparative example.

Here, the reliability value NRV shown in FIG. 15E ranges around 1.0, and it cannot be said that the reliability of the NDT scan matching is very much high. Further, FIG. 15F corresponds to the NDT reliability index NRI calculated by the equation (11) using the reliability value NRV shown in FIG. 15E, it is not a value very close to 1. Using this NDT reliability index NRI, the estimated own vehicle position X^ is calculated based on the equation (10). In this case, the error in the traveling direction shown in FIG. 14A is greatly improved as compared with the comparative example while other errors shown in FIG. 14B to FIG. 14D are also improved. Thus, it is inferred that the accuracy of the own vehicle position estimation has improved by the fusion of the NDT position $X_{NDT}$ and the DR position $X_{DR}$.

The applicant has also conducted additional experiment using another type of lidars. In the additional experiment, the applicant drove a vehicle equipped with lidars each of which is capable of ranging over a long distance and having 360-degrees horizontal viewing angle and an operating frequency 10Hz (cycle period 100ms), and performed the own vehicle position estimation by matching the point cloud data obtained from the lidars during the driving to the voxel data (ND map) prepared in advance for the traveling road. The RTK-GPS position data is used as the correct position data.

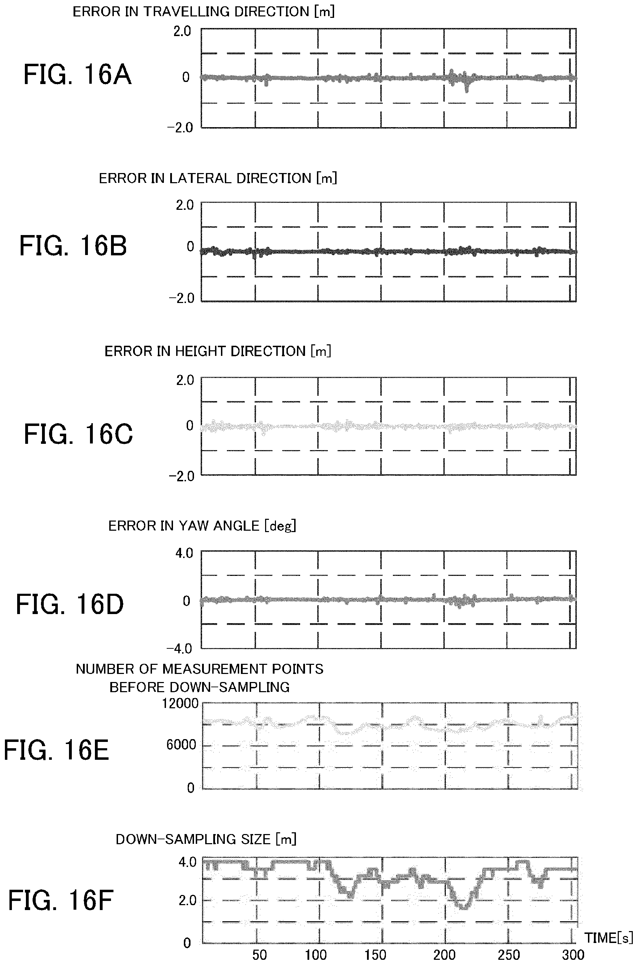

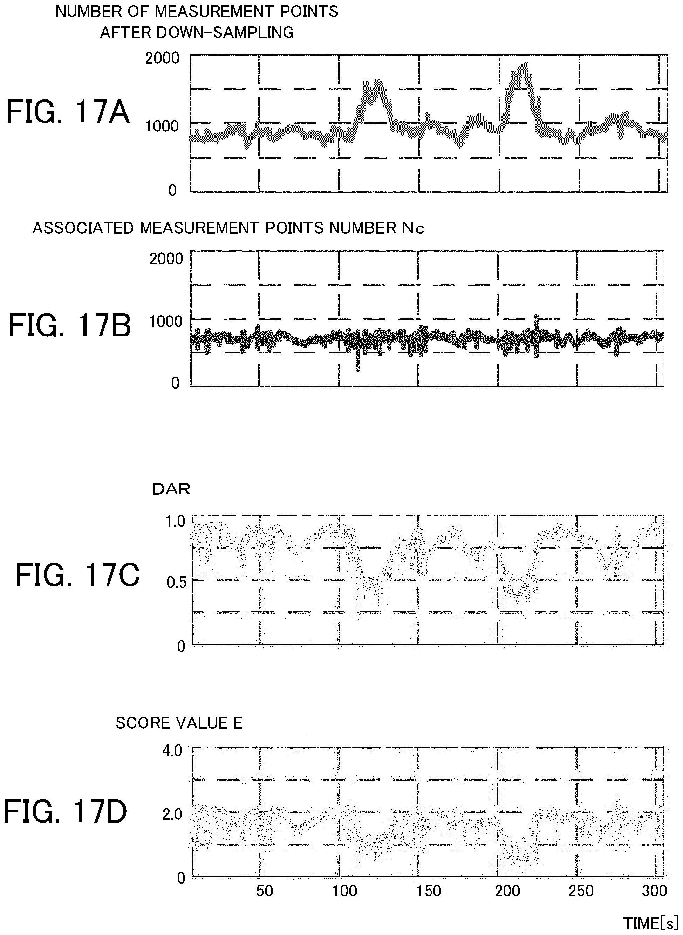

FIGS. 16A to 16F and FIGS. 17A to 17D show the vehicle position estimation results according to a comparative example in which NDT position $X_{NDT}$ is determined as the estimated own vehicle position X^. Here, with respect to the positioning result of RTK-GPS, FIG. 16A indicates the error in the traveling direction, FIG. 16B indicates the error in the lateral direction, FIG. 16C indicates the error in the height direction, FIG. 16D indicates the error in the yaw angle, FIG. 16E indicates the number of measurement points of the point cloud data before down-sampling, FIG. 16F indicates the size of down-sampling, respectively. Further, FIG.17A is the number of measurement points of the processed point cloud data after down-sampling, FIG.17B indicates the associated measurement points number Nc, FIG.17C indicates the association ratio DAR, FIG.17D indicates the score value E (k), respectively. The value of RMSE in the traveling direction was 0.031m, the value of RMSE in the lateral direction was 0.029m, the value of RMSE in the height direction was 0.027m, and the value of RMSE in the azimuth (yaw angle) was 0.051 degrees.

Since the lidars used in this experiment are long-distance and full-circumference type lidars, the number of measurement points before down-sampling shown in FIG. 16E is several tens of thousands, and the number of data is sufficiently large. Therefore, the down-sampling size DSS shown in FIG. 16F is relatively large compared to the experiments in FIGS. 12 to 15. In addition, the association ratio DAR is decreasing in the vicinity of the time 120s and 220s, but this is due to the fact that the roadway is an overpass road and the amount of map information is small, and the association ratio DAR and the score value is good for other places. As a consequence, although the error in the NDT position is good, there is a little disturbance in the vicinity of 220s shown in FIG. 16A.

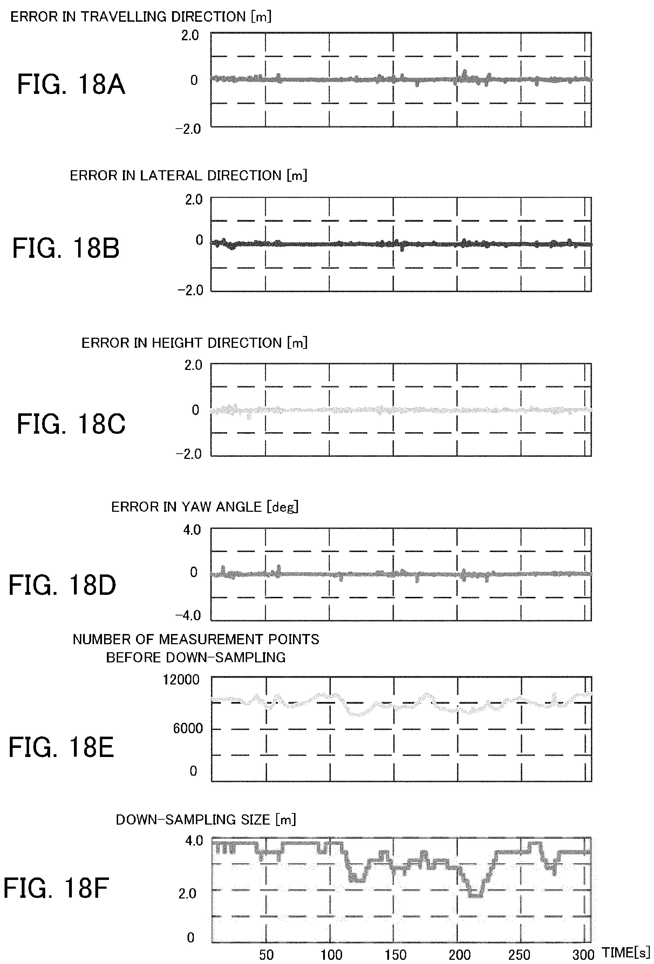

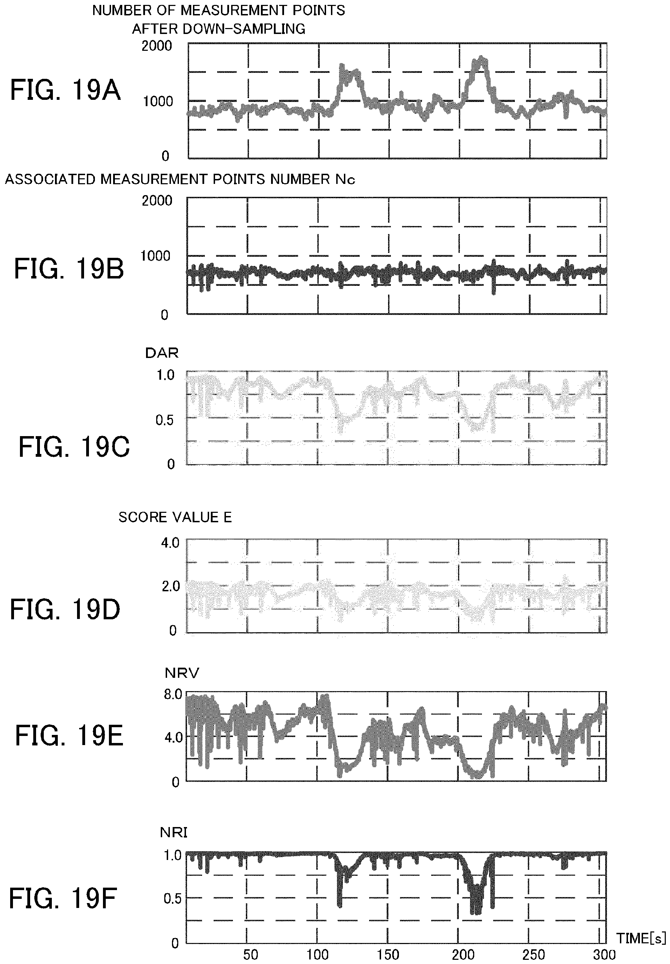

FIGS. 18A to 18F and FIGS. 19A to 19F show the results of the vehicle position estimation according to the embodiment in which the estimated own vehicle position X^ is determined by fusion of the NDT position $X_{NDT}$ and the DR position $X_{DR}$. Here, with respect to the positioning result of RTK-GPS, FIG. 18A indicates the error in the traveling direction, FIG. 18B indicates the error in the lateral direction, FIG. 18C indicates the error in the height direction, FIG. 18D indicates the error in the yaw angle, FIG. 18E indicates the number of measurement points of the point cloud data before down-sampling, FIG. 18F indicates the size of down-sampling, respectively. Further, FIG. 19A indicates the number of measurement points of the processed point cloud data after down-sampling, FIG. 19B indicates the associated measurement points number Nc, FIG. 19C indicates the association ratio DAR, FIG. 19D indicates the score value E (k), FIG. 19E indicates the reliability value NRV, FIG. 19F indicates the NDT reliability index NRI, respectively. The value of RMSE in the traveling direction is 0.029m, the value of RMSE in the lateral direction is 0.027m, the value RMSE in the height direction is 0.024m, and the value of RMSE in the azimuth (yaw angle) is 0.050 degrees, which are slightly better than those of the comparative example.

Here, the reliability value shown in FIG. 19E is decreasing in the vicinity of 120s and 220s and it can be said that the reliability value of the NDT scan matching is decreasing in these periods. Further, FIG. 19F corresponds to the NDT reliability index NRI calculated by the equation (11) using the reliability value NRV shown in FIG. 19E, it can be seen from FIG. 19F that the value is close to 1 except around 120s and 220s. The estimated own vehicle position X^ is calculated based on the equation (10) using this NDT reliability index NRI. In this instance, as shown in FIGS. 18A through 18D, errors around 220s are improved. Thus, it is inferred that the accuracy of the own vehicle position estimation was improved by the fusion of the NDT position $X_{NDT}$ and the DR position $X_{DR}$.

(8) Modifications

Hereinafter, a description will be given of preferred modifications to the above-described embodiment. The following modifications may be applied to the embodiment in any combination.

(First Modification)

The NDT reliability index NRI may be calculated by multiplying the reliability value NRV according to any of the equations (11) to (14) by a factor "$\alpha$".

In this case, equations (11) through (14) are expressed as equations (15) through (18) below using the factor a.

[Formula 11]

$$NRI = \frac{a \times NRV}{\sqrt{1 + (a \times NRV)^2}} \qquad (15)$$

$$NRI = \frac{2}{1 + exp(-a \times NRV)} - 1 \qquad (16)$$

$$NRI = \frac{arctan(a \times NRV)}{\dfrac{\pi}{2}} \qquad (17)$$

$$NRI = 1 - exp(-a \times NRV) \qquad (18)$$

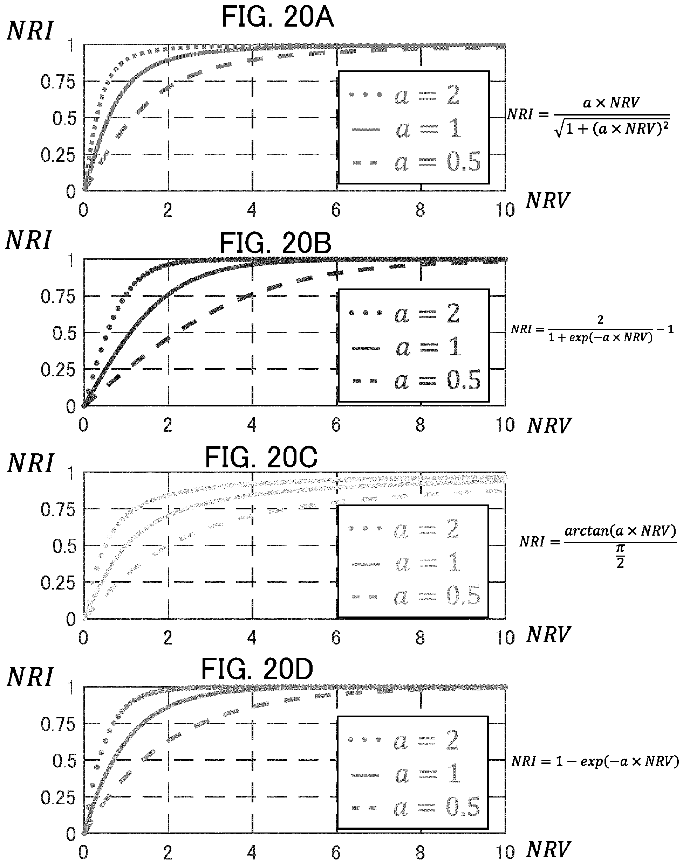

Further, FIG. 20A to FIG. 20D illustrate graphs showing the relation between the reliability value NRV and the NDT reliability index NRI for each of the equations (15) to (18). The graphs in FIG. 20A to FIG. 20D correspond to the case where the factor a is 0.5, the case where the factor a is 1, and the case where the factor a is 2, respectively.

Then, in this modification, the factor a is set to a value corresponding to the measurement accuracy of the lidar 2 to be used. For example, if the accuracy of the distance measurement value and the angle measurement value included in each measurement point of the lidar 2 is poor, the error is included in each of the measurement points of the point cloud data. In this case, since the NDT scan matching based on the erroneous point cloud data also produces erroneous results, the factor a is set to a small value. Consequently, the NDT reliability index NRI can be set to a smaller value for the same reliability value NRV.

On the other hand, when the measurement accuracy of the lidar 2 is high, the accuracy of the NDT scan matching is also good. Thus, in this case, by setting the factor a to a large value, even for the same reliability value NRV, it is possible to set the NDT reliability index NRI to a large value.

Although the measurement accuracy of the lidar 2 to be used is obtained from the value of the data sheet, it may be determined by actual measurement. For example, a specific object is continuously measured by the lidar 2 while the vehicle is at a stop, and then the dispersion value of the measurement values is calculated. Accordingly, it is possible to measure the actual measurement accuracy of the lidar 2.

Further, the NDT reliability index NRI may be determined to range from 0 to 1 based on any algorithm other than the equations (11) to (18).

For example, the NDT reliability index NRI may be determined as follows.

    For NRV < 2.5, NRI = NRV / 2.5
    For NRV ≧ 2.5, NRI = 1.0

In another example, the NDT reliability index NRI may be determined by division into cases, as follows.

    For NRV < 0.5, NRI = 0.5
    For 0.5 ≦ NRV < 1.0, NRI = 0.6
    For 1.0 ≦ NRV < 1.5, NRI = 0.7
    For 1.5 ≦ NRV < 2.0, NRI = 0.8
    For 2.0 ≦ NRV < 2.5, NRI = 0.9
    for 2.5 ≦ NRV, NRI = 1.0

Even in these cases, the fusion block 26 can determine the NDT reliability index NRI that is the reliability NRV normalized to range from 0 to 1.

(Second Modification)

The in-vehicle device 1 calculated the reliability value NRV based on the down-sampling size DSS assuming that down-sampling was performed. Alternatively, the in-vehicle device 1 may calculate the reliability NRV and use it to determine the weight w of the NDT position $X_{NDT}$, even when the down-sampling is not performed.

In this instance, the in-vehicle device 1 associates the point cloud data outputted by the lidar 2 with the voxel data VD, and performs the NDT scan matching, calculation of the score value E, and calculation of the association ratio DAR. Then, the in-vehicle device 1 determines the reliability value NRV based on the calculated score value E and the association ratio DAR. For example, the reliability value NRV is the product of the score value E and the association ratio DAR. Then, the in-vehicle device 1 calculates the NDT reliability index NRI normalized by the reliability value NRV based on the first embodiment or the first modification, and calculates the estimated own vehicle position X^ through the weighted mean calculation of the NDT position $X_{DR}$ and the NDT position $X_{NDT}$.

Thus, even when the down-sampling is not performed, the in-vehicle device 1 can suitably calculate the estimated own vehicle position X^.

(Third Modification)

The reliability value NRV is not limited to the product of the down-sampling size DSS, the score value E, and the association ratio DAR, but may be a value defined by any equation that has a positive correlation with the down-sampling size DSS, the score value E, and the association ratio DAR, respectively. The reliability value NRV may be calculated by using at least one of the down-sampling size DSS, the score value E, or the association ratio DAR. In other words, the reliability value NRV may be calculated based on any one or two of the down-sampling size DSS, the association ratio DAR, and the score value E. Further, since the down-sampling size DSS increases with increase in the number of measurement points before down-sampling (i.e., the number of measurement points of the point cloud data outputted by the lidar 2), for example, the reliability value NRV may be calculated using the value equal to (the number of measurement points before down-sampling / 10,000), instead of using the down-sampling size DSS.

(Fourth Modification)

The configuration of the driving support system shown in FIG. 1 is an example, and therefore the configuration of the driving support system to which the present invention can be applied is not limited to the configuration shown in FIG. 1. For example, in the driving support system, the electronic control unit of the vehicle may execute the process to be execute by the down sampling processing unit 14 and the own vehicle position estimation unit 15 of the in-vehicle device 1, in place of the in-vehicle device 1. In this instance, the map DB 10 is stored in, for example, a storage unit in the vehicle or a server device that performs data communication with the vehicle, and the electronic control unit of the vehicle performs the own vehicle position estimation based on the down-sampling and the NDT scan matching, etc. by referring to the map DB 10.

(Fifth Modification)

The data structure of the voxel data VD is not limited to a data structure that includes a mean vector and a covariance matrix, as shown in FIG. 5. For example, the voxel data VD may directly include the point cloud data measured by a measurement vehicle to be used in calculating the mean vector and the covariance matrix.

As described above, the controller 13 of the in-vehicle device 1 according to the embodiment is configured to acquire a DR position $X_{DR}$ that is a first candidate position of a vehicle. Further, the controllers 13 is configured to acquire an NDT position $X_{NDT}$ that is a second candidate position of the vehicle, the NDT position $X_{NDT}$ being determined based on NDT scan matching that is a matching between point cloud data and voxel data VD that is map data, the point cloud data being outputted by a lidar 2 that is the external sensor provided in the vehicle. Furthermore, the controllers 13 is configured to calculate a reliability value NRV representing the reliability of the NDT scan matching. The controllers 13 is configured to determine the estimated own vehicle position X^ based on the DR position $X_{DR}$, the NDT position $X_{NDT}$, and the reliability value NRV. In this way, even when there are few structures in the periphery or occlusion occurs, the controller 13 can suitably suppress the decrease in the position estimation accuracy.

In the embodiments described above, the program is stored by any type of a non-transitory computer-readable medium (non-transitory computer readable medium) and can be supplied to a control unit or the like that is a computer. The non-transitory computer-readable medium include any type of a tangible storage medium. Examples of the non-transitory computer readable medium include a magnetic storage medium (e.g., a flexible disk, a magnetic tape, a hard disk drive), a magnetic-optical storage medium (e.g., a magnetic optical disk), CD-ROM (Read Only Memory), CD-R, CD-R/W, a solid-state memory (e.g., a mask ROM, a PROM (Programmable ROM), an EPROM (Erasable PROM), a flash ROM, a RAM (Random Access Memory)).

While the present invention has been described with reference to the embodiments, the present invention is not limited to the above embodiments. Various modifications that can be understood by a person skilled in the art can be made to the configuration and details of the present invention within the scope of the present invention. Namely, the present invention includes, of course, various modifications that may be made by a person skilled in the art according to the entire disclosure including claims and technical ideas. In addition, all Patent and Non-Patent Literatures mentioned in this specification are incorporated by reference in its entirety.

DESCRIPTION OF REFERENCE NUMERALS

1    In-vehicle device

2    Lidar

3    Gyroscope sensor

4    Vehicle velocity sensor

5    GPS receiver

10   Map DB

**Claims**

1. An information processing device comprising:

   a first candidate position acquisition unit configured to acquire a first candidate position of a moving body;
   a second candidate position acquisition unit configured to acquire a second candidate position of the moving body, the second candidate position being determined based on matching between data based on an output from an external sensor provided in the moving body and map data;
   a reliability value calculation unit configured to calculate a reliability value representing a reliability of the matching;
   an estimated position determination unit configured to determine an estimated position of the moving body based on the first candidate position, the second candidate position, and the reliability value.

2. The information processing device according to claim 1,
   wherein the reliability value calculation unit is configured to determine the reliability value based on at least a score value indicating a fitting degree of the matching.

3. The information processing device according to claim 1 or 2,

   wherein the data is second point cloud data that is point cloud data obtained by applying down-sampling to first point cloud data that is point cloud data outputted from the external sensor, and
   wherein the reliability value calculation unit is configured to determine the reliability value based on at least one of a size of the down-sampling or the number of measurement points of the first point cloud data.

4. The information processing device according to any one of claims 1 to 3,

   wherein the data is point cloud data, and
   wherein the map data is voxel data representing positions of an object with respect to each voxel that is a unit area, and
   wherein the second candidate position acquisition unit is configured to

   associate measurement points of the point cloud data with the each voxel and
   determine the second candidate position based on the matching between voxel data of voxels subjected to the association and the measurement points associated with the voxels.

5. The information processing device according to claim 4,
   wherein the reliability value calculation unit is configured to calculate the reliability value based on at least an association ratio that is a ratio of the number of the measurement points associated with the voxels.

6. The information processing device according to claim 5,
   wherein the reliability value calculation unit is configured to calculate the reliability value that has a proportional relation with or a positive correlation with:

   the association ratio;
   a size of down-sampling to be applied to first point cloud data that is point cloud data outputted by the external sensor or
   the number of measurement points of the first point cloud data; and
   a score value indicating a fitting degree of the matching.

7. The information processing device according to any one of claims 1 to 6,
   wherein the estimated position determination unit is configured to determine the estimated position by a weighted mean of the first candidate position and the second candidate position, which are weighted based on the reliability value.

8. The information processing device according to claim 7,
   wherein the estimated position determination unit is configured to calculate a reliability index that is the reliability value normalized to range from 0 to 1 as a weight for the second candidate position.

9. The information processing device according to any one of claims 1 to 8,
   wherein the first candidate position acquisition unit is configured to acquire the position of the moving object determined by dead reckoning as the first candidate position.

10. A control method executed by a computer, the control method comprising:

    acquiring a first candidate position of a moving body;
    acquiring a second candidate position of the moving body, the second candidate position being determined based on matching between data based on an output from an external sensor provided in the moving body and map data;
    calculating a reliability value representing a reliability of the matching;
    determining an estimated position of the moving body based on the first candidate position, the second candidate position, and the reliability value.

11. A program causing a computer to:

    acquire a first candidate position of a moving body;
    acquire a second candidate position of the moving body, the second candidate position being determined based on matching between data based on an output from an external sensor provided in the moving body and map data;
    calculate a reliability value representing a reliability of the matching;
    determine an estimated position of the moving body based on the first candidate position, the second candidate position, and the reliability value.

12. A storage medium storing the program according to claim 11.

# FIG. 1

2 : LIDAR

1

VEHICLE VELOCITY SENSOR

4

GPS RECEIVER

5

IN-VEHICLE DEVICE

MAP DB

VOXEL DATA

10

VD

GYROSCOPE SENSOR

3

# FIG. 2

1

11 INTERFACE

13 CONTROLLER

DOWN-SAMPLING PROCESSING UNIT 14

OWN VEHICLE POSITION ESTIMATION UNIT 15

12 MEMORY

10 MAP DB

VD VOXEL DATA

# FIG. 3

14:DOWN-SAMPLING PROCESSING UNIT

POINT CLOUD DATA → 16 DOWN-SAMPLING → 17 ASSOCIATED MEASUREMENT POINTS NUMBER ACQUISITION → 18 COMPARISON → 19 DOWN-SAMPLING SIZE SETTING

PROCESSED POINT CLOUD DATA

15 OWN VEHICLE POSITION ESTIMATION UNIT

Nc

19

191 GAIN SETTING

x 1.1
x 1/1.1
x 1.0

192

EP 4 257 926 A1

# FIG. 4

# FIG. 5

VOXEL DATA

VOXEL ID

VOXEL COORDINATES

MEAN VECTOR

COVARIANCE MATRIX

:

## FIG. 6

15 : OWN VEHICLE POSITION ESTIMATION UNIT

EP 4 257 926 A1

# FIG. 7

ASSOCIATED WITH
VOXEL Vo6

ASSOCIATED WITH
VOXEL Vo5

NOT ASSOCIATED

ASSOCIATED WITH
VOXEL Vo1

# FIG. 8

$$NRI = \frac{NRV}{\sqrt{1 + (NRV)^2}}$$

$$NRI = \frac{2}{1 + exp(-NRV)} - 1$$

$$NRI = \frac{arctan(NRV)}{\frac{\pi}{2}}$$

$$NRI = 1 - exp(-NRV)$$

VOXELS

LIDAR'S MEASUREMENT PONTS

2

FIG. 9C

2

FIG. 9B

2

FIG. 9A

# FIG. 10A

ERROR DISTRIBUTION
OF DEAD RECKONING

ERROR DISTRIBUTION
OF NDT SCAN MATCHING

POSITION

DR POSITION

NDT POSITION

ESTIMATED OWN VEHICLE POSITION

# FIG. 10B

ERROR DISTRIBUTION
OF DEAD RECKONING

ERROR DISTRIBUTION
OF NDT SCAN MATCHING

POSITION

DR POSITION

NDT POSITION

ESTIMATED OWN VEHICLE POSITION

# FIG. 11

START

S11 | CALCULATE PREDICTED OWN VEHICLE POSITION FROM GPS POSITIONING RESULT

S12 | POINT CLOUD DATA ACQUIRED ? — No

Yes

S13 | CALCULATE DR POSITION THAT IS PREDICTED OWN VEHICLE POSITION FROM VEHICLE VELOCITY SENSOR DATA, GYROSCOPE SENSOR DATA, & PRECEDING ESTIMATED OWN VEHICLE POSITION

S14 | APPLY DOWN-SAMPLING TO POINT CLOUD DATA

S15 | CALCULATE NDT POSITION THROUGH NDT MATCHING PROCESS USING DR POSITION AS INITIAL VALUE

S16 | CALCULATE ASSOCIATION RATIO DAR

S17 | CALCULATE SCORE VALUE OF NDT MATCHING

S18 | CALCULATE RELIABILITY VALUE NRV BASED ON DSS & DAR & E

S19 | GENERATE NDT RELIABILITY INDEX NRI FROM NRV

S20 | CALCULATE FINAL ESTIMATED OWN VEHICLE POSITION THROUGH WEIGHTED MEAN OF DR POSITION & NDT POSITION USING NRI

S21 | TERMINATED ? — No

Yes

END

ERROR IN TRAVELLING DIRECTION [m]

FIG. 12A

ERROR IN LATERAL DIRECTION [m]

FIG. 12B

ERROR IN HEIGHT DIRECTION [m]

FIG. 12C

ERROR IN YAW ANGLE [deg]

FIG. 12D

NUMBER OF MEASUREMENT POINTS
BEFORE DOWN-SAMPLING

FIG. 12E

DOWN-SAMPLING SIZE [m]

FIG. 12F

NUMBER OF MEASUREMENT POINTS
AFTER DOWN-SAMPLING

**FIG. 13A**

ASSOCIATED MEASUREMENT POINTS NUMBER Nc

**FIG. 13B**

DAR

**FIG. 13C**

SCORE VALUE E

**FIG. 13D**

TIME [s]

ERROR IN TRAVELLING DIRECTION [m]

FIG. 14A

ERROR IN LATERAL DIRECTION [m]

FIG. 14B

ERROR IN HEIGHT DIRECTION [m]

FIG. 14C

ERROR IN YAW ANGLE
[deg]

FIG. 14D

NUMBER OF MEASUREMENT POINTS
BEFORE DOWN-SAMPLING

FIG. 14E

DOWN-SAMPLING SIZE [m]

FIG. 14F

50    100    150    200    250    300 TIME[s]

NUMBER OF MEASUREMENT POINTS
AFTER DOWN-SAMPLING

**FIG. 15A**

ASSOCIATED MEASUREMENT POINTS NUMBER Nc

**FIG. 15B**

DAR

**FIG. 15C**

SCORE VALUE E

**FIG. 15D**

NRV

**FIG. 15E**

NRI

**FIG. 15F**

TIME[s]

ERROR IN TRAVELLING DIRECTION [m]

FIG. 16A

ERROR IN LATERAL DIRECTION [m]

FIG. 16B

ERROR IN HEIGHT DIRECTION [m]

FIG. 16C

ERROR IN YAW ANGLE [deg]

FIG. 16D

NUMBER OF MEASUREMENT POINTS
BEFORE DOWN-SAMPLING

FIG. 16E

DOWN-SAMPLING SIZE [m]

FIG. 16F

TIME[s]

NUMBER OF MEASUREMENT POINTS
AFTER DOWN-SAMPLING

FIG. 17A

ASSOCIATED MEASUREMENT POINTS NUMBER Nc

FIG. 17B

DAR

FIG. 17C

SCORE VALUE E

FIG. 17D

TIME[s]

ERROR IN TRAVELLING DIRECTION [m]

**FIG. 18A**

ERROR IN LATERAL DIRECTION [m]

**FIG. 18B**

ERROR IN HEIGHT DIRECTION [m]

**FIG. 18C**

ERROR IN YAW ANGLE [deg]

**FIG. 18D**

NUMBER OF MEASUREMENT POINTS
BEFORE DOWN-SAMPLING

**FIG. 18E**

DOWN-SAMPLING SIZE [m]

**FIG. 18F**

TIME[s]

NUMBER OF MEASUREMENT POINTS
AFTER DOWN-SAMPLING

FIG. 19A

ASSOCIATED MEASUREMENT POINTS NUMBER Nc

FIG. 19B

DAR

FIG. 19C

SCORE VALUE E

FIG. 19D

NRV

FIG. 19E

NRI

FIG. 19F

TIME[s]

# FIG. 20A

$$NRI = \frac{a \times NRV}{\sqrt{1 + (a \times NRV)^2}}$$

Legend: $a = 2$ (dotted), $a = 1$ (solid), $a = 0.5$ (dashed)

# FIG. 20B

$$NRI = \frac{2}{1 + exp(-a \times NRV)} - 1$$

Legend: $a = 2$ (dotted), $a = 1$ (solid), $a = 0.5$ (dashed)

# FIG. 20C

$$NRI = \frac{arctan(a \times NRV)}{\frac{\pi}{2}}$$

Legend: $a = 2$ (dotted), $a = 1$ (solid), $a = 0.5$ (dashed)

# FIG. 20D

$$NRI = 1 - exp(-a \times NRV)$$

Legend: $a = 2$ (dotted), $a = 1$ (solid), $a = 0.5$ (dashed)

## INTERNATIONAL SEARCH REPORT

International application No.

**PCT/JP2021/043663**

### A. CLASSIFICATION OF SUBJECT MATTER

***G01C 21/30***(2006.01)i
FI:   G01C21/30

According to International Patent Classification (IPC) or to both national classification and IPC

### B. FIELDS SEARCHED

Minimum documentation searched (classification system followed by classification symbols)

G01C21/00-21/36, G08G1/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-038498 A (IHI CORP) 12 March 2020 (2020-03-12)<br>paragraphs [0016]-[0043], [0051], [0053] | 1-2, 4-7, 9-12 |
| Y | paragraphs [0016]-[0043], [0051], [0053] | 3, 8 |
| Y | CN 110009718 A (DEEPBLUE TECH SHANGHAI CO LTD) 12 July 2019 (2019-07-12)<br>paragraph [0096] | 3 |
| Y | WO 2020/085062 A1 (PIONEER CORPORATION) 30 April 2020 (2020-04-30)<br>paragraph [0048] | 8 |

☐ Further documents are listed in the continuation of Box C.    ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **27 January 2022** | **08 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/043663**

| Patent document cited in search report | | | Publication date (day/month/year) | Patent family member(s) | Publication date (day/month/year) |
|---|---|---|---|---|---|
| JP | 2020-038498 | A | 12 March 2020 | (Family: none) | |
| CN | 110009718 | A | 12 July 2019 | (Family: none) | |
| WO | 2020/085062 | A1 | 30 April 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013076829 A
- WO 2018221453 A

- WO 2019188745 A